# EUROPEAN PATENT APPLICATION

(11) **EP 4 797 753 A1**
(43) Date of publication of application: **26.08.2026**
(21) Application number: 23955795.2
(22) Date of filing: 20.10.2023
(51) Int. Cl.: H04W 12/041

(54) **KEY DERIVATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Mewburn Ellis LLP
(86) International application number: PCT/CN2023/125726
(87) International publication number: WO 2025/081474

(57) **Abstract**

A key derivation method, a device, a computer-readable storage medium, a computer program product, and a computer program are provided. The method includes the following. A terminal receives a next hop chaining counter (NCC) associated with a first 3GPP connection, where the first 3GPP connection is one of multiple 3GPP connections of the terminal. The terminal derives an access stratum (AS) key associated with the first 3GPP connection, where the AS key associated with the first 3GPP connection is derived from a security parameter associated with the first 3GPP connection, the security parameter associated with the first 3GPP connection includes the NCC associated with the first 3GPP connection, and AS keys associated with different 3GPP connections among the plurality of 3GPP connections of the terminal are different.

## Description

### TECHNICAL FIELD

This disclosure relates to the field of communication, and more particularly, to a key derivation method, a device, a computer-readable storage medium, a computer program product, and a computer program.

### BACKGROUND

In the existing technology, 5G systems can support the generation and simultaneous use of one set of 3rd generation partnership project (3GPP) access keys and one set of non-3GPP access keys. However, the prior art does not design a key derivation architecture for scenarios where a terminal simultaneously accesses the core network via two or more 3GPP connections. As a result, the security of each 3GPP connection cannot be ensured in scenarios where a terminal accesses the core network through multiple 3GPP connections simultaneously.

### SUMMARY

Embodiments of the disclosure provide a key derivation method, a device, a computer-readable storage medium, a computer program product, and a computer program.

Embodiments of the disclosure provide a key derivation method, which includes the following. A terminal receives a next hop chaining counter (NCC) associated with a first third generation partnership project (3GPP) connection, wherein the first 3GPP connection is one of multiple3GPP connections of the terminal. The terminal derives an access stratum (AS) key associated with the first 3GPP connection, wherein the AS key associated with the first 3GPP connection is derived from a security parameter associated with the first 3GPP connection, wherein the security parameter associated with the first 3GPP connection comprises the NCC associated with the first 3GPP connection, and wherein AS keys associated with different 3GPP connections among the plurality of 3GPP connections of the terminal are different.

Embodiments of the disclosure provide a key derivation method, which includes the following. A core network side device send to a terminal, an NCC associated with a 3GPP connection, wherein the first 3GPP connection is one of multiple3GPP connections of the terminal, and the NCC associated with the first 3GPP connection is used for the terminal to derive an access stratum (AS) key associated with the first 3GPP connection, wherein AS keys associated with different 3GPP connections among the plurality of 3GPP connections of the terminal are different. The core network side device send to a first access network device corresponding to the first 3GPP connection, a key generation parameter associated with the first 3GPP connection, wherein the key generation parameter associated with the first 3GPP connection is used for the first access network device to derive the AS key associated with the first 3GPP connection.

Embodiments of the disclosure provide a key derivation method, which includes the following. A first access network device receive a key generation parameter associated with a first 3GPP connection of a terminal, wherein the first 3GPP connection is one of multiple3GPP connections of the terminal. The first access network device derives an access stratum (AS) key associated with the first 3GPP connection, wherein the AS key associated with the first 3GPP connection is derived from the key generation parameter associated with the first 3GPP connection, and AS keys associated with different 3GPP connections among the plurality of 3GPP connections of the terminal are different.

Embodiments of the disclosure provide a terminal. The terminal includes a first communication unit and a first processing unit. The first communication unit is configured to receive an NCC associated with a first 3GPP connection, wherein the first 3GPP connection is one of multiple3GPP connections of the terminal. The first processing unit is configured to derive an AS key associated with the first 3GPP connection, wherein the AS key associated with the first 3GPP connection is derived from a security parameter associated with the first 3GPP connection, wherein the security parameter associated with the first 3GPP connection comprises the NCC associated with the first 3GPP connection, and wherein AS keys associated with different 3GPP connections among the plurality of 3GPP connections of the terminal are different.

Embodiments of the disclosure provide a core network side device, which includes a second communication unit. The second communication unit is configured to: send to a terminal, an NCC associated with a first 3GPP connection, wherein the first 3GPP connection is one of multiple3GPP connections of the terminal, and the NCC associated with the first 3GPP connection is used for the terminal to derive an AS key associated with the first 3GPP connection, wherein AS keys associated with different 3GPP connections among the plurality of 3GPP connections of the terminal are different; and send to a first access network device corresponding to the first 3GPP connection, a key generation parameter associated with the first 3GPP connection, wherein the key generation parameter associated with the first 3GPP connection is used for the first access network device to derive the AS key associated with the first 3GPP connection.

Embodiments of the disclosure provides a first access network device, which includes a third communication unit and a third processing unit. The third communication unit is configured to receive a key generation parameter associated with a first 3GPP connection of a terminal, wherein the first 3GPP connection is one of multiple3GPP connections of the terminal. The third processing unit is configured to derive an AS key associated with the first 3GPP connection, wherein the AS key associated with the first 3GPP connection is derived from the key generation parameter associated with the first 3GPP connection, and AS keys associated with different 3GPP connections among the plurality of 3GPP connections of the terminal are different.

Embodiments of the disclosure provides a terminal, includes: a transceiver, a processor, and a memory. The memory is configured to store a computer program, the transceiver is configured to communicate with other devices, and the processor is configured to invoke and run the computer program stored in the memory to cause the terminal to execute the above-described method.

An embodiment of the disclosure provides a core network side device, includes: a transceiver, a processor, and a memory. The memory is configured to store a computer program, the transceiver is configured to communicate with other devices, and the processor is configured to invoke and run the computer program stored in the memory to cause the core network side device to execute the above-described method.

An embodiment of the disclosure provides a first access network device, includes: a transceiver, a processor, and a memory. The memory is configured to store a computer program, the transceiver is configured to communicate with other devices, and the processor is configured to invoke and run the computer program stored in the memory to cause the first access network device to execute the above-described method.

Embodiments of the disclosure provide a chip for implementing the above-described method. Specifically, the chip includes: a processor configured to invoke and run a computer program from a memory, so as to cause a device equipped with the chip to execute the above-described method.

Embodiments of the disclosure provide a computer-readable storage medium configured to store a computer program. When the computer program is executed by a device, the device is caused to execute the above-described method.

Embodiments of the disclosure provide a computer program product including computer program instructions that cause a computer to execute the above-described method.

Embodiments of the disclosure provide a computer program that, when executed on a computer, causes the computer to execute the above-described method.

By adopting the solution provided in the embodiments, in a scenario where a terminal simultaneously maintains multiple 3GPP connections, an AS key associated with each of the terminal's 3GPP connections can be derived, with different AS keys associated with different 3GPP connections. In this way, for scenarios where a UE simultaneously accesses a 5G core network via two 3GPP connections, AS key derivation for each 3GPP connection is achieved. This addresses the issue in the related art where only one set of 3GPP access keys and one set of non-3GPP access keys can be generated and used simultaneously and where deriving AS keys for each 3GPP connection in multiple 3GPP connections is not supported, thereby ensuring the security of each 3GPP connection.

### BRIEF DESCRIPTION OF THE DRAWINGS

FIG. 1 is a schematic diagram of an application scenario according to an embodiment of the disclosure.
FIG. 2 is a schematic diagram of a 5G network system architecture.
FIG. 3 is a schematic diagram of a scenario where a terminal accesses a core network via 3GPP access and non-3GPP access.
FIG. 4 is a schematic flowchart of an authentication process.
FIG. 5 is a schematic diagram of a key derivation architecture scenario in a 5G system.
FIG. 6 is a schematic diagram of horizontal and vertical key derivation scenarios.
FIG. 7 is a schematic diagram of a scenario where a terminal accesses a core network via multiple 3GPP connections according to an embodiment of the disclosure.
FIG. 8 is a schematic flowchart of a key derivation method according to an embodiment of the disclosure.
FIG. 9 is a schematic flowchart of a key derivation method according to another embodiment of the disclosure.
FIG. 10 is another schematic flowchart of a key derivation method according to yet another embodiment of the disclosure.
FIG. 11 is a schematic diagram of a key derivation architecture in a 5G system according to an embodiment of the disclosure.
FIG. 12 is another schematic diagram of a key derivation architecture in a 5G system according to an embodiment of the disclosure.
FIG. 13 is yet another schematic diagram of a key derivation architecture in a 5G system according to an embodiment of the disclosure.
FIG. 14 is still another schematic diagram of a key derivation architecture in a 5G system according to an embodiment of the disclosure.
FIG. 15 is an example flowchart of a key derivation method according to another embodiment of the disclosure.
FIG. 16 is a schematic block diagram of a terminal according to an embodiment of the disclosure.
FIG. 17 is a schematic block diagram of a core network side device according to an embodiment of the disclosure.
FIG. 18 is a schematic block diagram of a first access network device according to an embodiment of the disclosure.
FIG. 19 is a schematic block diagram of a communication device according to an embodiment of the disclosure.
FIG. 20 is a schematic block diagram of a chip according to an embodiment of the disclosure.
FIG. 21 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure.

The technical solutions of the embodiments of the disclosure may be applied to various communication systems, such as: a long term evolution (LTE) system, an LTE-Advanced (LTE-A) system, a new radio (NR) system, an evolved NR system, an LTE-based access to unlicensed spectrum (LTE-U) system, an NR-based access to unlicensed spectrum (NR-U) system, a non-terrestrial network (NTN) system, a universal mobile telecommunications system (UMTS), a wireless local area network (WLAN), a wireless fidelity (WiFi) system, a 5th generation (5G) system, or another communication system.

Generally, conventional communication systems support a limited number of connections and are relatively easy to implement. However, with the development of communication technologies, mobile communication systems will support not only conventional communication but also, for example, device to device (D2D) communication, machine to machine (M2M) communication, machine type communication (MTC), vehicle to vehicle (V2V) communication, or vehicle to everything (V2X) communication. The embodiments of the disclosure may also be applied to these communication systems. In a possible implementation, the communication system in the embodiments of the disclosure may be applied to a carrier aggregation (CA) scenario, a dual connectivity (DC) scenario, or a standalone (SA) deployment scenario. In a possible implementation, the communication system in the embodiments of the disclosure may be applied to an unlicensed spectrum, where the unlicensed spectrum may also be considered as a shared spectrum. Alternatively, the communication system in the embodiments of the disclosure may be applied to a licensed spectrum, where the licensed spectrum may also be considered as a non-shared spectrum.

The embodiments of the disclosure are described with reference to a network device and a terminal device. The terminal device may also be referred to as user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. The terminal device may be a station (STA) in a WLAN, a cellular phone, a cordless phone, a session initiation protocol (SIP) phone, a wireless local loop (WLL) station, a personal digital assistant (PDA), a handheld device with wireless communication capabilities, a computing device, another processing device connected to a wireless modem, an in-vehicle device, a wearable device, a terminal device in a next-generation communication system such as an NR network, or a terminal device in a future evolved public land mobile network (PLMN). In the embodiments of the disclosure, the terminal device may be deployed on land, including indoor or outdoor deployment, and may be handheld, wearable, or vehicle-mounted. It may also be deployed on water (e.g., on ships) or in the air (e.g., on aircraft, balloons, or satellites). In the embodiments of the disclosure, the terminal device may be a mobile phone, a tablet computer, a computer with wireless transceiver functions, a virtual reality (VR) terminal device, an augmented reality (AR) terminal device, a wireless terminal in industrial control, a wireless terminal in self-driving systems, a wireless terminal in remote medical systems, a wireless terminal in smart grids, a wireless terminal in transportation safety systems, a wireless terminal in smart city systems, or a wireless terminal in smart home systems. By way of example and not limitation, in the embodiments of the disclosure, the terminal device may also be a wearable device. A wearable device may also be referred to as a wearable smart device, which is a general term for intelligently designed daily wearables developed using wearable technology, such as glasses, gloves, watches, clothing, and shoes. A wearable device is a portable device worn directly on the body or integrated into a user's clothing or accessories. A wearable device is not only a hardware device but also achieves powerful functionality through software support, data interaction, and cloud interaction. In a broad sense, wearable smart devices include full-featured, large-sized devices that can implement all or part of their functions without relying on smartphones, such as smart watches or smart glasses, as well as devices focused on specific types of application functions that need to be used in conjunction with other devices such as smartphones, such as various smart wristbands or smart jewelry for monitoring physical signs.

In the embodiments of the disclosure, a network device may be a device for communicating with a mobile device. The network device may be an access point (AP) in a WLAN, a base transceiver station (BTS) in global system for mobile communications (GSM) or code division multiple access (CDMA), a NodeB (NB) in wideband code division multiple access (WCDMA), an evolved NodeB (eNB or eNodeB) in LTE, a relay station, an access point, an in-vehicle device, a wearable device, a network device (gNB) in an NR network, a network device in a future evolved PLMN, or a network device in an NTN. By way of example and not limitation, in the embodiments of the disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a highly elliptical orbit (HEO) satellite. Optionally, the network device may also be a base station located on land, over water, or in other locations. In the embodiments of the disclosure, the network device may provide services for a cell. The terminal device communicates with the network device using transmission resources (e.g., frequency domain resources, or spectrum resources) used by the cell. The cell may be a cell corresponding to a network device (e.g., a base station). The cell may belong to a macro base station or a base station corresponding to a small cell. The small cell herein may include a metro cell, a micro cell, a pico cell, or a femto cell. These small cells have characteristics such as small coverage area and low transmit power, making them suitable for providing high-rate data transmission services.

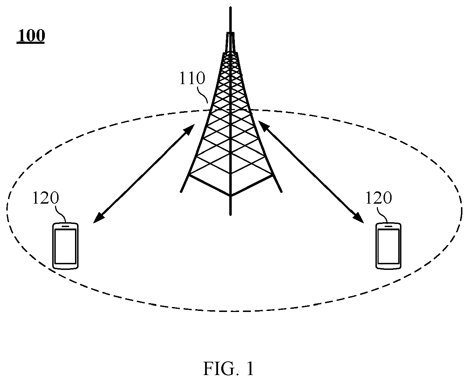

FIG. 1 exemplarily shows a communication system 100. The communication system includes one network device 110 and two terminal devices 120. In a possible implementation, the communication system 100 may include multiple network devices 110, and the coverage area of each network device 110 may include another number of terminal devices 120. This is not limited in the embodiments of the disclosure. In a possible implementation, the communication system 100 may further include other network entities such as a mobility management entity (MME) or an access and mobility management function (AMF). This is not limited in the embodiments of the disclosure. The network device may include an access network device and a core network device. That is, the wireless communication system further includes one or more core networks for communicating with the access network device. The access network device may be an evolved NodeB (eNB or eNodeB) in an LTE system, a next-generation NodeB (gNB) in an NR system, or a next-generation NodeB in a licensed assisted access LTE (LAA-LTE) system, a macro base station, a micro base station (also referred to as a "small base station"), a pico base station, an access point (AP), a transmission point (TP), or the like. It should be understood that a device having a communication function in the network/system in the embodiments of the disclosure may be referred to as a communication device. Taking the communication system shown in FIG. 1 as an example, communication devices may include network devices and terminal devices having communication functions. The network device and the terminal device may be the specific devices described in the embodiments of the disclosure, and details are not repeated herein. Communication devices may also include other devices in the communication system, such as a network controller, a mobility management entity, or other network entities. This is not limited in the embodiments of the disclosure.

To facilitate understanding of the embodiments of the disclosure, the basic procedures and basic concepts related to the embodiments of the disclosure are briefly described below. It should be understood that the basic procedures and basic concepts described below do not limit the embodiments of the disclosure.

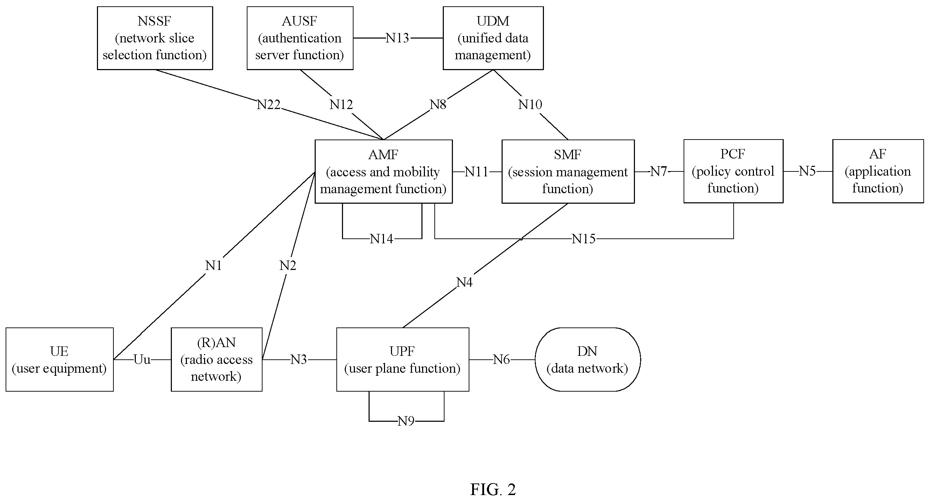

In the 5G network system architecture shown in FIG. 2, the architecture includes: a network slice selection function (NSSF), which is primarily responsible for managing network slice-related information, such as selecting a network slice for a terminal device; an authentication server function (AUSF), which is configured to perform identity authentication for user access; a unified data management (UDM) function, which is configured to manage and store subscription data and authentication data; an access and mobility management function (AMF), which is configured to perform mobility management, serve as a security anchor, manage security policies for UEs, etc. In addition to mobility management for a UE, the AMF is also responsible for forwarding session management-related messages between the UE and a session management function (SMF); the SMF is configured to perform session management, allocate and manage UE IP addresses, etc.; a policy control function (PCF), which is responsible for formulating policies related to mobility management, session management, charging, etc., for a UE; an application function (AF), which is used for external application servers; a user plane function (UPF), which is configured to perform complex user plane processing, such as forwarding traffic between a radio access network and the Internet, reporting traffic usage, and enforcing quality of service (QoS) policies; and a data network (DN), which is an external data network of the 5G core (5GC), such as the Internet. Data transmission is performed between various nodes within the 5GC, between a UE and a 5GC node, between a UE and a radio access network (RAN), and between a RAN and a 5GC node via corresponding interfaces. For example, as shown in FIG. 2: within the 5GC, the AMF and the NSSF perform data transmission via an N22 interface; the AMF performs data transmission with the SMF via an N11 interface; the AMF performs data transmission with the AUSF via an N12 interface; and the AMF performs data transmission with the UDM via an N8 interface. The SMF performs data transmission with the UPF via an N4 interface. The UPF performs data transmission with an external data network via an N6 interface and with an access network (AN) via an N3 interface. The UE establishes an access stratum connection with the AN via a Uu interface to exchange access stratum messages and wireless data, and establishes a non-access stratum (NAS) connection with the AMF via an N1 interface to exchange NAS messages. The RAN performs data transmission with the AMF via an N2 interface and with the UPF via an N3 interface. It should be understood that the foregoing describes only some of the interfaces between nodes; other interfaces between other nodes in the 5GC shown in FIG. 2 are not described in detail. In FIG. 2, except for the UE, the (R)AN, and the DN, all other nodes are core network nodes. Core network nodes may be further classified into user plane nodes (i.e., the UPF in FIG. 2) and control plane nodes (other core network nodes besides the UPF).

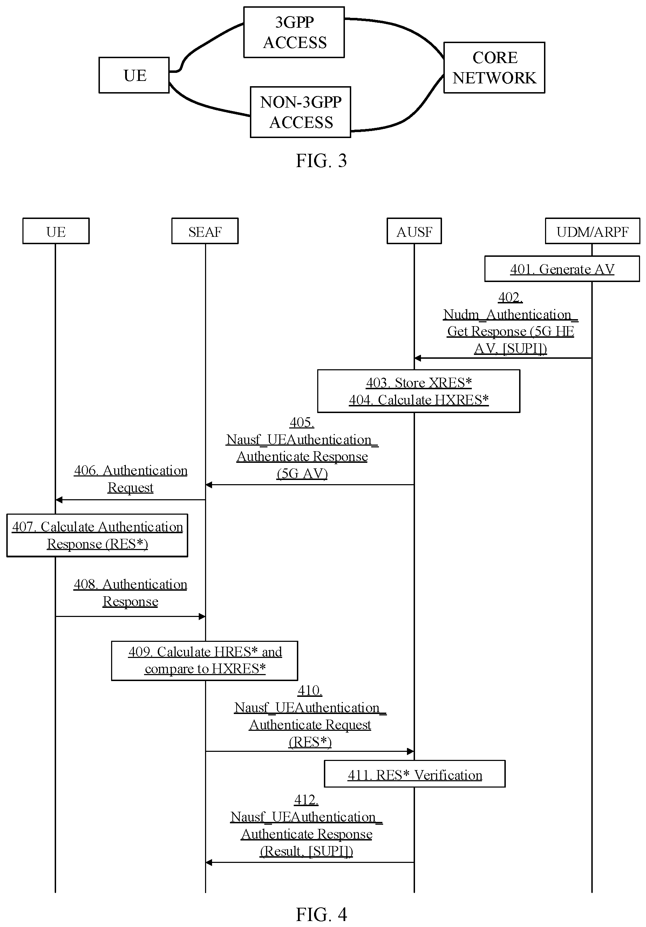

Under current standards, a UE can simultaneously access the core network through 3GPP access and non-3GPP access, and can transmit different data packets via either 3GPP access or non-3GPP access. For this purpose, the 3GPP core network needs to authenticate the UE and derive corresponding keys for both 3GPP and non-3GPP access. As shown in FIG. 4, the specific steps include the following. S401: after receiving an authentication request (such as from the UE), the UDM/ARPF generates an authentication vector (AV) based on a root key (K) of the UE. This AV can be a 5G home environment authentication vector (5G HE AV), which may include at least one of the following: RAND (random number), AUTN, expected authentication response (XRES*), and key Kausf. S402: the UDM/ARPF sends a Nudm authentication get response (carrying the 5G HE AV and optionally [SUPI] to the AUSF, where [] represents optional. S403: the AUSF stores the XRES* from the 5G HE AV. S404: the AUSF calculates the hashed expected authentication response (HXRES). S405: the AUSF sends a Nausf UE authentication authenticate response (carrying 5G AV) to the SEAF. The 5G AV may include at least one of: RAND, AUTN, HXRES*, and key KSEAF. S406: the SEAF sends an authentication request including the 5G AV to the UE. S407: the UE calculates an authentication response (RES*), specifically calculating RES* and relevant access stratum (AS) keys and non-access stratum (NAS) keys based on the 5G AV. S408: the UE sends an authentication response carrying RES* to the SEAF/AMF. S409: the SEAF/AMF calculates HRES* based on RES* and compares HRES* with HXRES*; if they match, it proceeds to S410. S410: the SEAF sends a Nausf UE authentication authenticate request carrying RES* to the AUSF. S411: the AUSF verifies RES* by comparing RES* with XRES*; if they match, it proceeds to S412. S412: the AUSF sends a Nausf UE authentication authenticate response to the SEAF/AMF, carrying the authentication result (i.e., the verification outcome of RES*) and optionally the user's subscription permanent identifier (SUPI) of the UE.

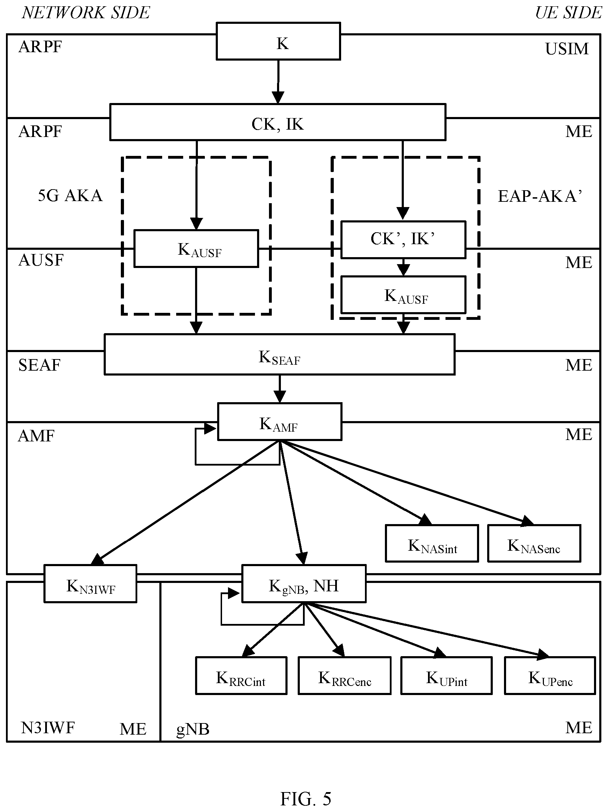

In the processing flow illustrated in FIG. 4, the involved key derivation architecture of the 5G system can be as shown in FIG. 5. The key derivation on the network side may include: the ARPF (typically co-located with the UDM) uses the root key K to generate the next-level keys CK and IK; further, the ARPF then generates the next-level key K_{AUSF} based on CK and IK or generates CK' and IK' and then derives K_{AUSF} from them. The ARPF sends the generated K_{AUSF} to the AUSF for use. The AUSF generates the next-level key K_{SEAF} based on K_{AUSF} and sends it to the SEAF (typically co-located with the AMF). The SEAF generates K_{AMF} based on K_{SEAF} and produces an indication parameter ngKSI to identify this K_{AMF}. The AMF can further generate (K_{gNB}, NH) and K_{N3IWF} based on K_{AMF}, where (K_{gNB}, NH) is used for NAS and AS layer connections under 5G 3GPP access, and K_{N3IWF} is used for NAS layer connections under 5G non-3GPP access. Here, the NAS keys derived by the AMF may include at least one of: K_{NASint} and K_{NASenc}.

Continuing with Figure 5, on the UE side, the UE can be further divided into universal subscriber identity module (USIM) and mobile equipment (ME). Except for CK and IK, which are generated by the USIM of the UE, all other levels of keys are generated by the ME on the UE side. On the gNB side, it receives (K_{gNB}, NH) sent by the AMF. Both the UE side and the gNB side further derive AS keys based on (K_{gNB}, NH). As shown in FIG. 5, these AS keys may include at least one of: K_{RRCint}, K_{RRCenc}, K_{UPint}, and K_{UPenc}.

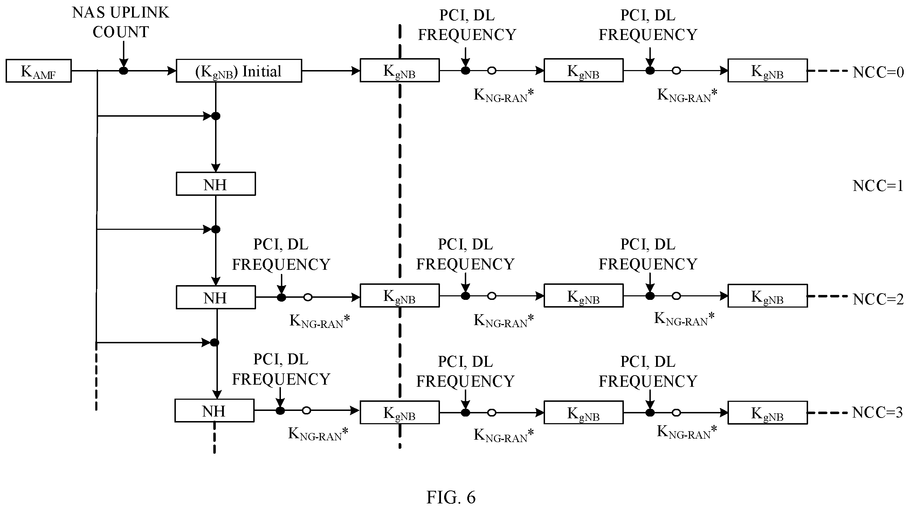

On the UE side and the gNB side, a determination is made based on {NCC, NH} to execute either horizontal or vertical derivation in order to obtain a new K_{gNB} (or K_{NG-RAN}*). For example, FIG. 6 illustrates horizontal key derivation and vertical key derivation. When the base station (gNB) has unused {NCC, NH} information, vertical derivation is performed; if there is no unused {NCC, NH} information, horizontal derivation is performed. For instance, during a handover process, unused {NCC, NH} information is used to derive a new key K_{gNB}, i.e., vertical derivation. If there is no unused {NCC, NH} information, a new K_{gNB} (K_{NG-RAN}*) is derived based on the currently used K_{gNB}, i.e., horizontal derivation. When performing horizontal derivation or vertical derivation, other parameters may also be used together to generate K_{gNB}. As shown in FIG. 6, when performing horizontal derivation, a new K_{gNB} (K_{NG-RAN}*) is derived based on the currently used K_{gNB}, PCI, and downlink (DL) frequency. It should be noted that on the base station (gNB) side, only the first obtained key is the initial K_{gNB}. All keys obtained thereafter are NH (or referred to as NH parameters). For example, as shown in FIG. 6, when NCC=0, the base station obtains the initial K_{gNB}, which is derived by the AMF based on K_{AMF} and the NAS uplink (UL) COUNT; when NCC=2, the base station obtains NH, which is derived by the AMF based on K_{AMF} and the most recently derived NH.

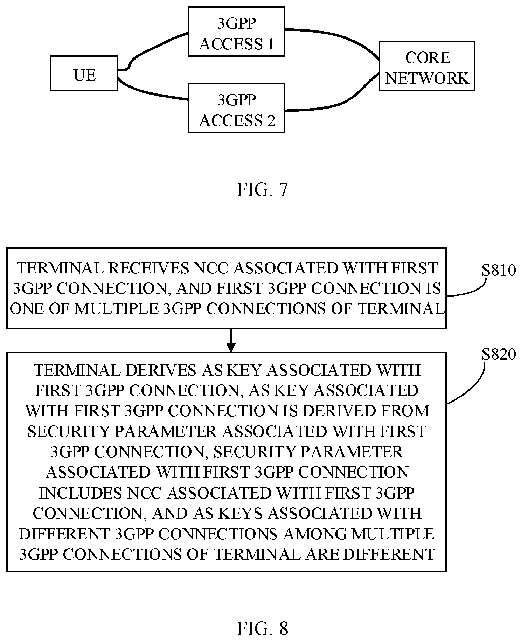

However, in the aforementioned related art, the 5G system supports the generation and simultaneous use of one set of 3GPP access keys and one set of non-3GPP access keys, but it cannot support the scenario where a terminal simultaneously accesses the core network (or 5G core network) via two or more 3GPP accesses, as illustrated in FIG. 7. Therefore, there is a need to provide a key derivation scheme capable of supporting scenarios where a terminal simultaneously accesses the core network via multiple 3GPP accesses. Additionally, regarding FIG. 7, it should be noted that the base stations for 3GPP Access 1 and 3GPP Access 2 may be the same, and they may also be different. Regardless of whether the base stations for 3GPP Access 1 and 3GPP Access 2 are the same or different, logically, two AS air interface connections and/or two NAS connections need to be maintained. Therefore, in essence, both scenarios are the same, meaning that derived AS keys and/or NAS keys need to be used respectively for each 3GPP access.

It should be understood that the terms "system" and "network" are often used interchangeably herein. The term "and/or" herein merely describes an associative relationship between associated objects, indicating that three relationships may exist. For example, A and/or B may indicate: A alone exists, both A and B exist, or B alone exists. Additionally, the character "/" herein generally indicates that the associated objects before and after it are in an "or" relationship. It should be understood that "indication" mentioned in the embodiments of the disclosure may be direct indication, indirect indication, or may indicate an associative relationship. For example, A indicating B may mean that A directly indicates B, e.g., B may be obtained via A; it may also mean that A indirectly indicates B, e.g., A indicates C, and B may be obtained via C; it may also indicate that there is an associative relationship between A and B. In the description of the embodiments of the disclosure, the term "correspond" may indicate a direct or indirect correspondence between the two, may also indicate an associative relationship between the two, or may refer to relationships such as indication and being indicated, configuration and being configured, etc.

To facilitate the understanding of the technical solutions of the embodiments of the disclosure, the relevant technologies of the embodiments of the disclosure are described below. The following relevant technologies, as optional solutions, may be arbitrarily combined with the technical solutions of the embodiments of the disclosure, and all such combinations fall within the protection scope of the embodiments of the disclosure.

FIG. 8 is a schematic flowchart of a key derivation method according to an embodiment of the disclosure. The method includes at least part of the following content.

S810, a terminal receives a next hop chaining counter (NCC) associated with a 3GPP connection, where the first 3GPP connection is one of multiple 3GPP connections of the terminal.

S820, the terminal derives an access stratum (AS) key associated with the first 3GPP connection, where the AS key associated with the first 3GPP connection is derived from a security parameter associated with the first 3GPP connection, where the security parameter associated with the first 3GPP connection comprises the NCC associated with the first 3GPP connection, and where AS keys associated with different 3GPP connections among the plurality of 3GPP connections of the terminal are different.

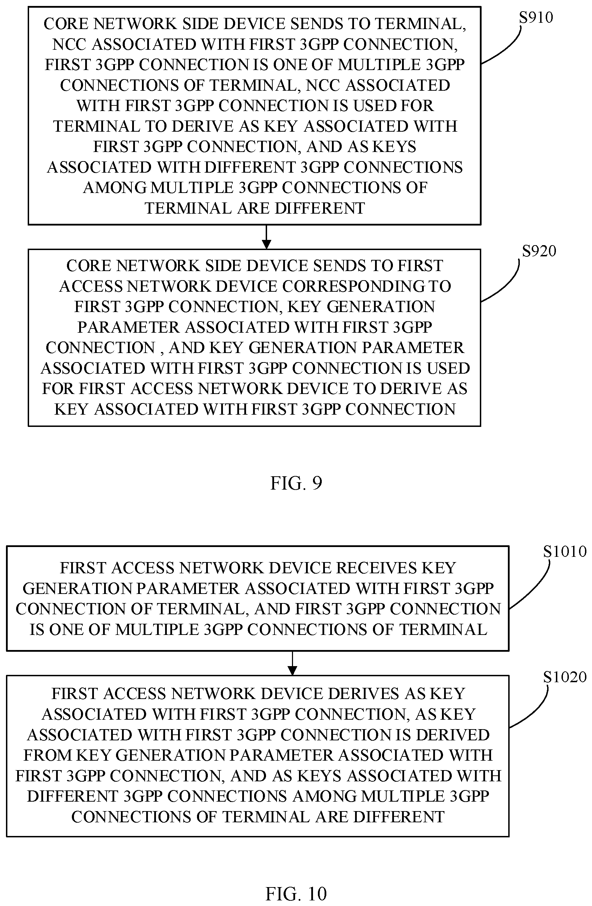

FIG. 9 is a schematic flowchart of a key derivation method according to another embodiment of the disclosure. The method includes at least part of the following content.

S910, a core network side device sends to a terminal, an NCC associated with a first 3GPP connection, where the first 3GPP connection is one of multiple 3GPP connections of the terminal, and the NCC associated with the first 3GPP connection is used for the terminal to derive an AS key associated with the first 3GPP connection, where AS keys associated with different 3GPP connections among the plurality of 3GPP connections of the terminal are different.

S920, the core network side device sends to a first access network device corresponding to the first 3GPP connection, a key generation parameter associated with the first 3GPP connection, where the key generation parameter associated with the first 3GPP connection is used for the first access network device to derive the AS key associated with the first 3GPP connection.

Here, the processing of S910 and S920 may be performed in any order. For example, S910 may be executed first, followed by S920; alternatively, S920 may be executed first, followed by S910, and so on. The disclosure does not limit or exhaustively define the execution order of S910 and S920.

FIG. 10 is a schematic flowchart of a key derivation method according to another embodiment of the disclosure. The method includes at least part of the following content.

S1010, a first access network device receives a key generation parameter associated with a first 3GPP connection of a terminal, where the first 3GPP connection is one of multiple3GPP connections of the terminal.

S1020, the first access network device derives an AS key associated with the first 3GPP connection, where the AS key associated with the first 3GPP connection is derived from the key generation parameter associated with the first 3GPP connection, and AS keys associated with different 3GPP connections among the plurality of 3GPP connections of the terminal are different.

The terminal may be a 3GPP terminal, i.e., a terminal capable of accessing a 3GPP network to perform data transmission and reception. Examples of the terminal include mobile phones, watches, tablets, etc. All possible types of terminals are not limited or exhaustively enumerated herein.

The multiple 3GPP connections of the terminal may refer to multiple 3GPP connections currently maintained by the terminal, or multiple 3GPP connections simultaneously maintained by the terminal. Here, the multiple 3GPP connections may refer to two or more 3GPP connections.

Different 3GPP connections among the multiple 3GPP connections of the terminal correspond to different radio bearers. The radio bearer may include at least one of the following: data radio bearer (DRB) and signaling radio bearer (SRB).

The first 3GPP connection is one of the multiple 3GPP connections of the terminal. Further, in the embodiments of the disclosure, the first 3GPP connection primarily refers to at least one of the following: any 3GPP connection among the multiple 3GPP connections of the terminal that is not first established; any 3GPP connection among the multiple 3GPP connections of the terminal for which AS keys are not first derived.

The first 3GPP connection being any 3GPP connection among the multiple 3GPP connections of the terminal that is not first established means that, prior to the first 3GPP connection, the terminal has already established one or more other 3GPP connections, and has derived and simultaneously maintains the AS keys associated with each of the other 3GPP connections.

The first 3GPP connection being any 3GPP connection among the multiple 3GPP connections of the terminal for which AS keys are not first derived means that, prior to the first 3GPP connection, the terminal has already derived the associated AS keys for each of the one or more other 3GPP connections that it simultaneously maintains. It should be understood that this description is made only from the perspective of the terminal. In actual processing, the access network device side corresponding to each of the other 3GPP connections has also derived and simultaneously maintains the associated AS keys. This is omitted for brevity.

The access network device may include at least one of the following: base station, gNB, eNB, network device in a future evolved PLMN network, network device in an NTN network, satellite, etc.

The first access network device may refer to the access network device corresponding to or associated with the first 3GPP connection of the terminal. It should be noted that each of the multiple 3GPP connections of the terminal has a corresponding access network device. The access network devices corresponding to different 3GPP connections of the terminal may be the same or different. The same access network device may correspond to one or more 3GPP connections of the terminal, and different access network devices correspond to different 3GPP connections of the terminal. For example, the SRB and/or DRB of any two 3GPP connections among the multiple 3GPP connections of the terminal may be different, but these two 3GPP connections may correspond to the same base station. As another example, the SRB and/or DRB of any two 3GPP connections among the multiple 3GPP connections of the terminal are different, and the access nodes (i.e., access network devices) corresponding to these two 3GPP connections are also different.

The core network side device may include a core network element capable of maintaining, deriving, or transmitting key-related parameters associated with each of the multiple 3GPP connections of the terminal. The key-related parameters associated with each 3GPP connection may at least include the K_{AMF} associated with each 3GPP connection. Further, the key-related parameters associated with each 3GPP connection may also include at least one of the following: the NCC associated with each 3GPP connection, key generation parameters, etc., which are not limited or exhaustively enumerated herein. For example, the core network side device may include at least one of the following: one or more access and mobility management functions (AMF), SEAF. It should be understood that the above is only an exemplary description. In actual processing, the core network side device is not limited to the core network elements listed above, and all possible core network elements of the core network side device are not exhaustively enumerated herein.

Next, the processing in which the core network side device allocates the NCC associated with the first 3GPP connection and the key generation parameters associated with the first 3GPP connection, the terminal derives the AS keys associated with the first 3GPP connection based on the security parameters associated with the first 3GPP connection, and the first access network device derives the AS keys associated with the first 3GPP connection based on the key generation parameters associated with the first 3GPP connection will be described in detail. It should be understood that any 3GPP connection among the multiple 3GPP connections of the terminal that is not the first established and/or any 3GPP connection for which AS keys are not first derived may perform the same or similar processing as the first 3GPP connection. For the sake of brevity, these are not described one by one below.

In some possible implementations, the first keys associated with different 3GPP connections among the multiple 3GPP connections of the terminal are the same. In this implementation, the first key may be K_{AMF}. In the following, the first key and K_{AMF} have the same meaning and will not be explained repeatedly.

In this implementation, the K_{AMF} associated with the multiple 3GPP connections of the terminal is the same K_{AMF}. That is, only one set of K_{AMF} shared between the terminal and the core network side device needs to be maintained on the terminal side and the core network device side.

In some embodiments, the NCCs associated with different 3GPP connections among the multiple 3GPP connections of the terminal are different, and the intermediate keys associated with different 3GPP connections are also different.

On the core network side device side, the intermediate key associated with the first 3GPP connection is derived based on the key K_{AMF} associated with the first 3GPP connection.

Specifically, on the core network side device, the intermediate key associated with the first 3GPP connection is derived based on the same first key (K_{AMF}) associated with the multiple 3GPP connections of the terminal and a first intermediate key, where the first intermediate key is the intermediate key corresponding to the terminal generated last time. Here, the intermediate key associated with the first 3GPP connection includes the next hop (NH) key associated with the first 3GPP connection; the first intermediate key may include one of the following: an initial key, a first NH. Since the first keys (i.e., K_{AMF}) associated with the multiple 3GPP connections of the terminal are the same in this embodiment, an initial key can be derived based on the same K_{AMF} for all 3GPP connections. In this implementation, the initial key may be K_{gNB}. In the following, the initial key and K_{gNB} have the same meaning and will not be explained repeatedly.

It should be understood that NH may also be referred to as a next hop parameter or the like in some possible examples, and all possible names for NH are not limited or exhaustively enumerated here.

The core network side device may determine the NCC associated with the first 3GPP connection. The NCC associated with the first 3GPP connection may be used to indicate the number of times the intermediate key associated with the first 3GPP connection is derived from the initial key K_{gNB}. The NCC associated with the first 3GPP connection is greater than the NCC last allocated by the core network side device to the terminal. It should be understood that NCC may also be referred to as a next hop key count value, or a next hop key related count value, or an NCC value, or the value of NCC. All possible names or descriptions for NCC are not limited or exhaustively enumerated here.

As explained in the previous embodiment, the first 3GPP connection is any 3GPP connection among the multiple 3GPP connections of the terminal that is not the first established and/or any 3GPP connection among the multiple 3GPP connections of the terminal for which AS keys are not first derived. Therefore, the core network side device has already allocated NCCs and intermediate keys for one or more other 3GPP connections of the terminal. In this embodiment, besides maintaining the same first key K_{AMF} associated with the multiple 3GPP connections of the terminal, the core network side device also maintains the NCC associated with each other 3GPP connection of the terminal and the intermediate key associated with each other 3GPP connection.

Correspondingly, the manner in which the core network side device determines the first intermediate key may be: based on the allocated NCC associated with each other 3GPP connection of the terminal and the intermediate key associated with each other 3GPP connection of the terminal, determining the last generated intermediate key corresponding to the terminal, and using the last generated intermediate key corresponding to the terminal as the first intermediate key.

Specifically, the manner in which the core network side device derives the intermediate key associated with the first 3GPP connection may include: using a key generation algorithm to compute the same first key K_{AMF} associated with the multiple 3GPP connections of the terminal and the first intermediate key, thereby obtaining the intermediate key associated with the first 3GPP connection. The key generation algorithm may be configured according to actual circumstances; for example, the key generation algorithm may be a key derivation function (KDF). It should also be noted that computing the same K_{AMF} associated with the multiple 3GPP connections of the terminal and the first intermediate key to obtain the intermediate key associated with the first 3GPP connection may involve performing one or more derivation calculations or deduction calculations. The number of derivation or deduction calculations equals the difference between the NCC associated with the first 3GPP connection and the NCC last allocated to the terminal.

Taking the 3GPP connection associated with the NCC and intermediate key last allocated (the last allocation may also be the most recent or latest allocation) by the core network side device as the second 3GPP connection of the terminal as an example, that is, the last allocation by the core network side device for the terminal is {the NCC associated with the second 3GPP connection, the intermediate key associated with the second 3GPP connection}.

In one scenario, the NCC associated with the second 3GPP connection may be equal to an initial value (e.g., 0), and the intermediate key associated with the second 3GPP connection is the initial key K_{gNB}. In this scenario, the second 3GPP connection may be the first 3GPP connection established by the terminal, and the initial key K_{gNB} associated with the second 3GPP connection may be derived based on the same first key K_{AMF} associated with the multiple 3GPP connections of the terminal. The specific derivation method is not limited in this embodiment.

The core network side device may use the intermediate key associated with the second 3GPP connection as the first intermediate key, that is, the first intermediate key is the initial key K_{gNB}.

The core network side device may determine the NCC associated with the first 3GPP connection, which is greater than the NCC associated with the second 3GPP connection. Moreover, the core network side device may use a key generation algorithm to compute the same first key K_{AMF} associated with the multiple 3GPP connections of the terminal and the initial key K_{gNB}, thereby obtaining the intermediate key associated with the first 3GPP connection. Here, the number of derivation or deduction calculations performed by the core network side device to compute the intermediate key associated with the first 3GPP connection equals the difference between the NCC associated with the first 3GPP connection and the NCC associated with the second 3GPP connection.

For example, suppose the core network side device maintains {NCC1=0, initial key K_{gNB}} associated with the second 3GPP connection. The manner in which the core network side device derives the intermediate key NH2 associated with the first 3GPP connection may be based on the same first key K_{AMF} associated with the multiple 3GPP connections of the terminal and the initial key K_{gNB} to derive NH2. The number of derivation calculations performed by the core network side device in deriving NH2 may be one or more times. In any derivation calculation during the process of computing NH2, the calculation formula used by the core network side device may be KDF (Key, S), where KDF() is the KDF calculation function, Key is the same first key K_{AMF} associated with the multiple 3GPP connections of the terminal, and S includes the last derived key (e.g., the initial key K_{gNB} or the last derived NH). The core network side device may determine that the value of NCC2 associated with the first 3GPP connection is an integer greater than NCC1 (which is 0 in the current scenario). For example, NCC2 may be 1, 2, or other values. The difference between NCC2 and NCC1 may equal the number of derivations performed by the core network side device to derive NH2 from the initial key K_{gNB}. After the above processing, the core network side device ultimately obtains {NCC2, NH2} associated with the first 3GPP connection.

In one scenario, the NCC associated with the second 3GPP connection may not be equal to 0, and the intermediate key associated with the second 3GPP connection is a first NH. In this scenario, the core network side device may use the intermediate key associated with the second 3GPP connection as the first intermediate key, that is, the first intermediate key is the first NH.

The core network side device may determine the NCC associated with the first 3GPP connection, the NCC associated with the first 3GPP connection is greater than the NCC associated with the second 3GPP connection. Moreover, the core network side device may use a key generation algorithm to compute the same first key, i.e., K_{AMF}, associated with the multiple 3GPP connections of the terminal and the first NH, thereby obtaining the intermediate key associated with the first 3GPP connection. Here, the number of derivation or deduction calculations performed by the core network side device to compute the intermediate key associated with the first 3GPP connection may equal the difference between the NCC associated with the first 3GPP connection and the NCC associated with the second 3GPP connection.

For example, assume the core network side device maintains {NCC1, first NH} associated with the second 3GPP connection. The manner in which the core network side device derives the intermediate key NH2 associated with the first 3GPP connection may be based on the same first key, i.e., K_{AMF}, associated with the multiple 3GPP connections of the terminal and the first NH to derive NH2. Here, the number of derivation calculations performed by the core network side device in deriving NH2 may be one or more times. In any derivation calculation during the process of computing NH2, the calculation formula used by the core network side device may be KDF (Key, S), where KDF() is the KDF calculation function, Key is the same K_{AMF} associated with the multiple 3GPP connections of the terminal, and S includes the last derived key (e.g., the first NH or the last derived NH). The core network side device may determine that the value of NCC2 associated with the first 3GPP connection is an integer greater than NCC1 (which is not 0 in the current scenario). For instance, if NCC1 equals 1, then NCC2 may be 2, 3, or other values. The difference between NCC2 and NCC1 may equal the number of derivations performed by the core network side device to derive NH2 from the first NH. After the above processing, the core network side device ultimately obtains {NCC2, NH2} associated with the first 3GPP connection.

After obtaining the NCC associated with the first 3GPP connection and the intermediate key associated with the first 3GPP connection, the core network side device may perform the following processing: sending the NCC associated with the first 3GPP connection to the terminal; and sending the key generation parameters associated with the first 3GPP connection to the first access network device corresponding to the first 3GPP connection. In this embodiment, the key generation parameters associated with the first 3GPP connection include: the NCC associated with the first 3GPP connection; and the key generation parameters associated with the first 3GPP connection also include: the intermediate key associated with the first 3GPP connection.

It should be noted that after obtaining the NCC associated with the first 3GPP connection and the intermediate key associated with the first 3GPP connection, the core network side device will associatively maintain or store the first key (i.e., K_{AMF}) associated with the first 3GPP connection, the NCC associated with the first 3GPP connection, and the intermediate key associated with the first 3GPP connection.

On the terminal side, after receiving the NCC associated with the first 3GPP connection, the processing for deriving the AS keys associated with the first 3GPP connection may be performed. The following explains the related processing for deriving the AS keys associated with the first 3GPP connection on the terminal side.

The security parameters associated with the first 3GPP connection may include the NCC associated with the first 3GPP connection, meaning the terminal may first include the NCC associated with the first 3GPP connection as one of the security parameters associated with the first 3GPP connection. Further, the security parameters associated with the first 3GPP connection may also include at least one of the following: the first key (K_{AMF}) associated with the first 3GPP connection, and the intermediate key associated with the first 3GPP connection.

On the terminal side, the AS keys associated with the first 3GPP connection are derived based on the intermediate key associated with the first 3GPP connection, where the intermediate key associated with the first 3GPP connection is derived based on the same first key K_{AMF} associated with the multiple 3GPP connections of the terminal, the NCC associated with the first 3GPP connection, and a first intermediate key. The first intermediate key is the intermediate key generated by the terminal last time.

The intermediate key associated with the first 3GPP connection includes the NH associated with the first 3GPP connection. The first intermediate key may include one of the following: an initial key or a first NH.

Specifically, the processing for deriving the AS keys associated with the first 3GPP connection on the terminal side may include: the terminal calculates the intermediate key associated with the first 3GPP connection based on the same first key K_{AMF} associated with the multiple 3GPP connections of the terminal, the NCC associated with the first 3GPP connection, and the first intermediate key; the terminal calculates the access network key associated with the first 3GPP connection based on the intermediate key associated with the first 3GPP connection and the first radio parameters of the first 3GPP connection; and the terminal calculates the AS keys associated with the first 3GPP connection based on the access network key associated with the first 3GPP connection. In this implementation, the access network key may be K_{NG-RAN}. Hereinafter, the access network key and K_{NG-RAN} have the same meaning and will not be explained repeatedly.

Here, the K_{AMF} associated with the first 3GPP connection maintained on the terminal side may specifically be the same first key K_{AMF} associated with the multiple 3GPP connections of the terminal. The explanation of the same K_{AMF} associated with the multiple 3GPP connections of the terminal is the same as in the previous embodiments and will not be reiterated.

The terminal calculating the intermediate key associated with the first 3GPP connection based on the same first key K_{AMF} associated with the multiple 3GPP connections of the terminal, the NCC associated with the first 3GPP connection, and the first intermediate key may include: determining the number of derivation calculations (or deduction calculations) based on the NCC associated with the first 3GPP connection, and using a key generation algorithm to derive the intermediate key associated with the first 3GPP connection based on the same first key K_{AMF} associated with the multiple 3GPP connections of the terminal, the first intermediate key, and the number of derivation calculations. The key generation algorithm is the same as in the aforementioned embodiment and will not be repeated. It should be noted that the number of derivation calculations equals the difference between the NCC associated with the first 3GPP connection and the NCC last obtained by the terminal.

As explained in the previous embodiment, the first 3GPP connection is any 3GPP connection among the multiple 3GPP connections of the terminal that is not the first established and/or any 3GPP connection among the multiple 3GPP connections of the terminal for which AS keys are not first derived. Therefore, the terminal side will maintain the security parameters associated with each of the one or more other 3GPP connections for which it has already derived AS keys. The security parameters associated with each other 3GPP connection include at least one of the following: the NCC associated with each other 3GPP connection, the first key K_{AMF} associated with each other 3GPP connection, and the intermediate key associated with each other 3GPP connection. Accordingly, the manner in which the terminal determines the first intermediate key may be: based on the security parameters associated with each other 3GPP connection, determining the last generated intermediate key of the terminal as the first intermediate key.

The last generated intermediate key of the terminal and the last obtained NCC of the terminal may be associated with the same 3GPP connection.

Taking the NCC associated with the second 3GPP connection of the terminal as the last obtained NCC of the terminal, and the intermediate key associated with the second 3GPP connection of the terminal as the last generated intermediate key of the terminal as an example.

In one scenario, the NCC associated with the second 3GPP connection may be equal to the initial value, i.e., 0, and the intermediate key associated with the second 3GPP connection is the initial key K_{gNB}. The terminal may use the intermediate key associated with the second 3GPP connection as the first intermediate key, that is, the first intermediate key is the initial key K_{gNB}.

The terminal may determine the number of derivation calculations (or deduction calculations) based on the NCC associated with the first 3GPP connection, and use a key generation algorithm to derive the intermediate key associated with the first 3GPP connection based on the same first key K_{AMF} associated with the multiple 3GPP connections of the terminal, the initial key K_{gNB}, and the number of derivation calculations.

For example, assume the security parameters of the second 3GPP connection maintained by the terminal include {NCC1=0, initial key K_{gNB}}; further assume that the NCC associated with the first 3GPP connection received by the terminal is denoted as NCC2. The terminal may use NCC2 as the number of derivation calculations, and then use a key generation algorithm to derive NH2 based on the number of derivation calculations, the same K_{AMF} associated with the multiple 3GPP connections of the terminal, and the initial key K_{gNB}, treating NH2 as the intermediate key associated with the first 3GPP connection. In the process of calculating the intermediate key (i.e., NH2) associated with the first 3GPP connection, the calculation formula used by the terminal in any derivation calculation may be KDF (Key, S), where KDF() is the KDF calculation function, Key is the same first key K_{AMF} associated with the multiple 3GPP connections of the terminal, and S includes the last derived key (e.g., the initial key K_{gNB} or the last derived NH). After the above processing, the terminal ultimately obtains {NCC2, NH2} in the security parameters associated with the first 3GPP connection.

In one scenario, the NCC associated with the second 3GPP connection may not be equal to 0, and the intermediate key associated with the second 3GPP connection is a first NH. In this scenario, the terminal may use the intermediate key associated with the second 3GPP connection as the first intermediate key, that is, the first intermediate key is the first NH.

The terminal may determine the number of derivation calculations (or deduction calculations) based on the difference between the NCC associated with the first 3GPP connection and the NCC associated with the second 3GPP connection. Using a key generation algorithm, the terminal may derive the intermediate key associated with the first 3GPP connection based on the same first key K_{AMF} associated with the multiple 3GPP connections of the terminal, the first NH, and the number of derivation calculations.

For example, assume the terminal maintains {NCC1, first NH} associated with the second 3GPP connection; further assume that the NCC associated with the first 3GPP connection received by the terminal is denoted as NCC2. The terminal may calculate the difference between NCC2 and NCC1, determine the number of derivation calculations based on this difference, and then use a key generation algorithm to derive NH2 based on the number of derivation calculations, the same K_{AMF} associated with the multiple 3GPP connections of the terminal, and the first NH, treating NH2 as the intermediate key associated with the first 3GPP connection. In the process of calculating NH2, the calculation formula used by the terminal in any derivation calculation may be KDF (Key, S), where KDF() is the KDF calculation function, Key is the same K_{AMF} associated with the multiple 3GPP connections of the terminal, and S includes the last derived key (e.g., the first NH or the last derived NH). After the above processing, the terminal ultimately obtains {NCC2, NH2} in the security parameters associated with the first 3GPP connection.

Alternatively, the terminal may also use the NCC associated with the first 3GPP connection as the number of derivation calculations (or deduction calculations). Using a key generation algorithm, the terminal may derive the intermediate key associated with the first 3GPP connection based on the same first key K_{AMF} associated with the multiple 3GPP connections of the terminal, the initial key K_{gNB}, and the number of derivation calculations.

The terminal calculating the access network key K_{NG-RAN} associated with the first 3GPP connection based on the intermediate key associated with the first 3GPP connection and the first radio parameters of the first 3GPP connection may include: the terminal performing horizontal derivation based on the intermediate key associated with the first 3GPP connection and the first radio parameters of the first 3GPP connection to obtain the access network key K_{NG-RAN} associated with the first 3GPP connection.

In some possible examples, the access network key K_{NG-RAN} associated with the first 3GPP connection may also be alternatively denoted as K_{NG-RAN}*, or the access network key K_{NG-RAN} associated with the first 3GPP connection may also be alternatively referred to as a non-initial key K_{gNB}.

Here, the first radio parameters of the first 3GPP connection may include at least one of the following: the cell identifier corresponding to the first 3GPP connection, the uplink (UL) frequency information corresponding to the first 3GPP connection, the downlink (DL) frequency information corresponding to the first 3GPP connection, the tracking area code (TAC) corresponding to the first 3GPP connection, and the radio bearer identifier corresponding to the first 3GPP connection.

The cell identifier may be a physical cell identifier (PCI). The UL frequency information may include UL frequency point information. The DL frequency information may include DL frequency point information. The radio bearer may include DRB and/or SRB; correspondingly, the radio bearer identifier may include: SRB ID and/or DRB ID.

The AS keys associated with the first 3GPP connection may include at least one of the following: K_{RRCint} associated with the first 3GPP connection, K_{RRCenc} associated with the first 3GPP connection, K_{UPint} associated with the first 3GPP connection, and K_{UPenc} associated with the first 3GPP connection.

Accordingly, the terminal calculating the AS keys associated with the first 3GPP connection based on the access network key associated with the first 3GPP connection may include at least one of the following: the terminal calculating K_{RRCint} associated with the first 3GPP connection based on a specified first integrity key generation algorithm and the access network key associated with the first 3GPP connection; the terminal calculating K_{UPint} associated with the first 3GPP connection based on a specified second integrity key generation algorithm and the access network key associated with the first 3GPP connection; the terminal calculating K_{RRCenc} associated with the first 3GPP connection based on a specified first encryption key generation algorithm and the access network key associated with the first 3GPP connection; and the terminal calculating K_{UPenc} associated with the first 3GPP connection based on a specified second encryption key generation algorithm and the access network key associated with the first 3GPP connection.

The K_{UPint} associated with the first 3GPP connection may be a key used to protect the UP (User Plane) traffic between the terminal and the first access network device through a specific integrity protection algorithm.

The _{KUPenc} associated with the first 3GPP connection may be a key used to protect the UP traffic between the terminal and the first access network device through a specific encryption algorithm.

The K_{RRCint} associated with the first 3GPP connection may be a key used to protect the RRC signaling between the terminal and the first access network device through a specific integrity protection algorithm.

The K_{UPenc} associated with the first 3GPP connection may be a key used to protect the RRC signaling between the terminal and the first access network device through a specific encryption algorithm.

The first integrity key generation algorithm, the second integrity key generation algorithm, the first encryption key generation algorithm, and the second encryption key generation algorithm may all be configured according to actual circumstances. This embodiment does not limit or exhaustively enumerate these algorithms.

It should be noted that after the terminal calculates the AS keys associated with the first 3GPP connection based on the access network key associated with the first 3GPP connection, the terminal will associatively maintain or store the security parameters associated with the first 3GPP connection and the AS keys associated with the first 3GPP connection.

On the first access network device side, after receiving the key generation parameters associated with the first 3GPP connection, the AS keys associated with the first 3GPP connection may be derived. The following explains the related processing for deriving the AS keys associated with the first 3GPP connection on the first access network device side.

The key generation parameters associated with the first 3GPP connection include: the NCC associated with the first 3GPP connection and the intermediate key associated with the first 3GPP connection.

On the first access network device side, the AS keys associated with the first 3GPP connection are derived based on the intermediate key associated with the first 3GPP connection.

Specifically, the processing for the first access network device to derive the AS keys associated with the first 3GPP connection may include: the first access network device calculating the access network key K_{NG-RAN} associated with the first 3GPP connection based on the intermediate key associated with the first 3GPP connection and the first radio parameters of the first 3GPP connection; and the first access network device calculating the AS keys associated with the first 3GPP connection based on the access network key associated with the first 3GPP connection.

Here, the specific explanation of the first access network device calculating the access network key K_{NG-RAN} associated with the first 3GPP connection based on the intermediate key associated with the first 3GPP connection and the first radio parameters of the first 3GPP connection is the same as the specific processing in which the terminal calculates the access network key K_{NG-RAN} associated with the first 3GPP connection based on the intermediate key associated with the first 3GPP connection and the first radio parameters of the first 3GPP connection, and thus will not be repeated. The explanation of the AS keys associated with the first 3GPP connection and the processing in which the first access network device calculates the AS keys associated with the first 3GPP connection based on the access network key associated with the first 3GPP connection are also the same as the processing in which the terminal calculates the AS keys associated with the first 3GPP connection based on the access network key associated with the first 3GPP connection, and thus will not be repeated.

It should be noted that after the first access network device calculates the AS keys associated with the first 3GPP connection based on the access network key associated with the first 3GPP connection, the first access network device side will associatively maintain or store the key generation parameters associated with the first 3GPP connection and the AS keys associated with the first 3GPP connection.

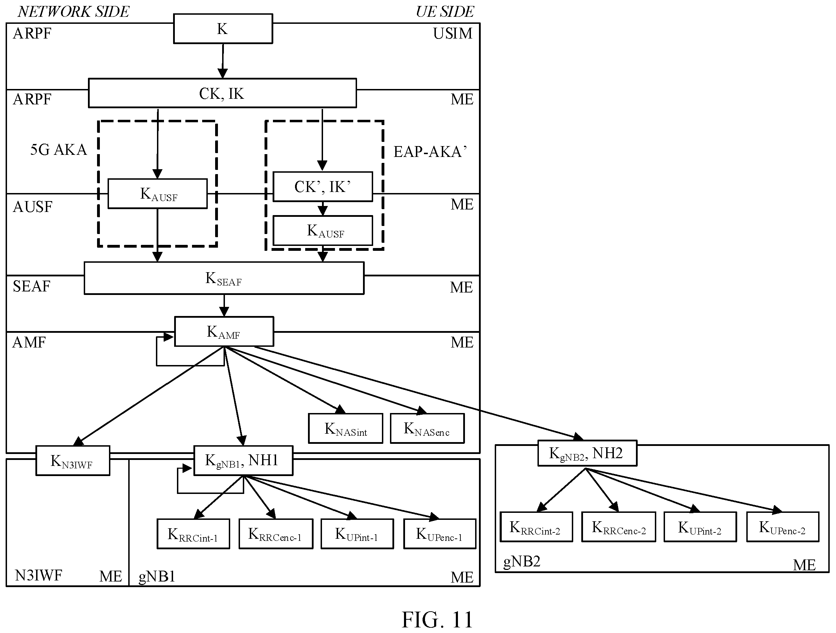

Referring to FIG. 11, an exemplary description of the key derivation method in a scenario where the K_{AMF} associated with different 3GPP connections among the multiple 3GPP connections of the terminal are the same, while the NCCs associated with different 3GPP connections among the multiple 3GPP connections of the terminal are different and the intermediate keys associated with different 3GPP connections are different is provided as follows.

Assume that the terminal has currently established a 3GPP connection 1 (i.e., the second 3GPP connection in the previous embodiment). Both the terminal side (specifically including ME and USIM as shown in FIG. 11) and the core network side device (indicated as the network side in FIG. 11) maintain K_{AMF} (this K_{AMF} is the same K_{AMF} associated with all 3GPP connections of the terminal), the NCC1 associated with 3GPP connection 1, and the intermediate key associated with 3GPP connection 1. The intermediate key associated with 3GPP connection 1 may be NH1 as shown in FIG. 11 (i.e., the first NH in the previous embodiment). Furthermore, the terminal and the gNB corresponding to 3GPP connection 1 (denoted as gNB1 in FIG. 11 for 3GPP connection 1) maintain the AS keys associated with 3GPP connection 1. In the process of deriving the AS keys associated with 3GPP connection 1, the terminal and gNB1 may first derive K_{gNB1} (or K_{NG-RAN} associated with 3GPP connection 1) as shown in FIG. 11 based on NH1, and then derive the AS keys associated with 3GPP connection 1 based on K_{gNB1}. The AS keys associated with 3GPP connection 1 are indicated in FIG. 11 as: K_{RRCint-1}, K_{RRCenc-1}, K_{UPint-1}, and K_{UPenc-1}. It should be understood that in actual processing, the AS keys associated with 3GPP connection 1 may include at least one of the following four keys illustrated in FIG. 11: K_{RRCint-1}, K_{RRCenc-1}, K_{UPint-1}, and K_{UPenc-1}.

Subsequently, the terminal initiates a first procedure via 3GPP connection 2 (i.e., the first 3GPP connection in the previous embodiment). During the execution of the first procedure, the core network side device generates NCC2 associated with 3GPP connection 2 and NH2 associated with 3GPP connection 2. The core network side device (e.g., AMF) sends NCC2 associated with 3GPP connection 2 to the terminal, and sends NCC2 and NH2 to the gNB corresponding to 3GPP connection 2 (denoted as gNB2 in FIG. 11 for 3GPP connection 2).

The terminal derives the intermediate key associated with 3GPP connection 2 (i.e., NH2 as indicated in FIG. 11) based on NCC2 of 3GPP connection 2, K_{AMF} (i.e., the same K_{AMF} associated with all 3GPP connections of the terminal), and NH1. In the process of deriving the AS keys associated with 3GPP connection 2 by the terminal and gNB2, K_{gNB}2 (or K_{NG-RAN} associated with 3GPP connection 2) as shown in FIG. 11 may first be derived based on NH2, and then the AS keys associated with 3GPP connection 2 may be derived based on K_{gNB2}. The AS keys associated with 3GPP connection 2 are indicated in FIG. 11 as: K_{RRCint-2}, K_{RRCenc-2}, K_{UPint-2}, and K_{UPenc-2}. It should be understood that in actual processing, the AS keys associated with 3GPP connection 2 may include at least one of the following four keys illustrated in FIG. 11: K_{RRCint-2}, K_{RRCenc-2}, K_{UPint-2}, and K_{UPenc-2}.

Regarding the example in FIG. 11, it should be further noted that, for clarity, gNB1 corresponding to 3GPP connection 1 and gNB2 corresponding to 3GPP connection 2 are illustrated separately. In actual scenarios, gNB1 and gNB2 may be the same device or different devices, both of which fall within the scope of protection of this embodiment and will not be elaborated here. Additionally, FIG. 11 also illustrates the related keys derived by network elements such as ARPF, AUSF, SEAF, and N3IWF. The relevant descriptions of these keys have been detailed earlier and therefore will not be repeated here.

In some embodiments, the NCCs associated with different 3GPP connections among the multiple 3GPP connections of the terminal are the same, while the intermediate keys associated with different 3GPP connections are different.

The core network side device may allocate the NCC associated with the first established 3GPP connection and the initial key K_{gNB} or NH associated with the first established 3GPP connection, for the first 3GPP connection established by the terminal. The manner in which the core network side device derives the initial key K_{gNB} or NH for the first established 3GPP connection of the terminal may be based on the same K_{AMF} associated with the multiple 3GPP connections of the terminal. The specific derivation method is not elaborated here.

However, the first 3GPP connection is any 3GPP connection among the multiple 3GPP connections of the terminal that is not the first established and/or any 3GPP connection among the multiple 3GPP connections of the terminal for which AS keys are not first derived. In this embodiment, the core network side device no longer generates a new intermediate key for the first 3GPP connection, nor does it allocate a new NCC for the first 3GPP connection. Instead, it uses the NCC associated with other historically established 3GPP connections of the terminal as the NCC associated with the first 3GPP connection. Here, the other historically established 3GPP connections of the terminal may include the first established 3GPP connection of the terminal.

After determining the NCC associated with the first 3GPP connection, the core network side device may perform the following processing: sending the NCC associated with the first 3GPP connection to the terminal; and sending the key generation parameters associated with the first 3GPP connection to the first access network device corresponding to the first 3GPP connection. In this embodiment, the key generation parameters associated with the first 3GPP connection only include: the NCC associated with the first 3GPP connection.

It should be noted that after obtaining the NCC associated with the first 3GPP connection, the core network side device will associatively maintain or store the first key K_{AMF} associated with the first 3GPP connection and the NCC associated with the first 3GPP connection.

On the terminal side, after receiving the NCC associated with the first 3GPP connection, the processing for deriving the AS keys associated with the first 3GPP connection may be performed. The following explains the related processing for deriving the AS keys associated with the first 3GPP connection on the terminal side.

On the terminal side, the security parameters associated with the first 3GPP connection may include the NCC associated with the first 3GPP connection, meaning the terminal may first include the NCC associated with the first 3GPP connection as one of the security parameters associated with the first 3GPP connection. Further, the security parameters associated with the first 3GPP connection may also include the intermediate key associated with the first 3GPP connection.

The AS keys associated with the first 3GPP connection are derived based on the intermediate key associated with the first 3GPP connection. The intermediate key associated with the first 3GPP connection is generated based on a second intermediate key and the first radio parameters of the first 3GPP connection, where the NCC corresponding to the second intermediate key is the same as the NCC associated with the first 3GPP connection.

Specifically, the processing for deriving the AS keys associated with the first 3GPP connection on the terminal side may include: the terminal determining the second intermediate key based on the NCC associated with the first 3GPP connection; the terminal calculating the intermediate key associated with the first 3GPP connection based on the second intermediate key and the first radio parameters of the first 3GPP connection; and the terminal calculating the AS keys associated with the first 3GPP connection based on the intermediate key associated with the first 3GPP connection.

The intermediate key associated with the first 3GPP connection includes the access network key associated with the first 3GPP connection. The second intermediate key includes one of the following: an initial key, a second NH, or a second access network key. Here, the explanation of the first radio parameters of the first 3GPP connection is the same as in the previous embodiments and will not be repeated.

In this implementation, the first key may be K_{AMF}; the initial key may be K_{gNB}; the access network key may be K_{NG-RAN}. In the following embodiments, the first key may be represented by K_{AMF} (or the first key K_{AMF}), the initial key may be represented by K_{gNB} (or the initial key K_{gNB}), and the access network key may be represented by K_{NG-RAN} (or the access network key K_{NG-RAN}). These will not be repeatedly explained hereafter.

Since the first 3GPP connection is any 3GPP connection among the multiple 3GPP connections of the terminal that is not the first established and/or any 3GPP connection among the multiple 3GPP connections of the terminal for which AS keys are not first derived, the terminal side will maintain the security parameters associated with each of the one or more other 3GPP connections for which it has already derived AS keys. The security parameters associated with each other 3GPP connection include at least one of the following: the NCC associated with each other 3GPP connection, the K_{AMF} associated with each other 3GPP connection, and the intermediate key associated with each other 3GPP connection.

Correspondingly, the terminal determining the second intermediate key based on the NCC associated with the first 3GPP connection may include: the terminal, based on the security parameters associated with each of the one or more other 3GPP connections maintained by the terminal, searching for an intermediate key and using it as the second intermediate key, where the intermediate key is the same as the NCC associated with the first 3GPP connection and was last generated or previously generated by the terminal.

Taking the NCC and intermediate key associated with the second 3GPP connection of the terminal, which are the same as the NCC associated with the first 3GPP connection and were last generated or previously generated by the terminal, as an example.

In one scenario, the intermediate key associated with the second 3GPP connection is the initial key K_{gNB}. The terminal may use the initial key K_{gNB} associated with the second 3GPP connection as the second intermediate key.

The terminal calculating the intermediate key associated with the first 3GPP connection based on the second intermediate key and the first radio parameters of the first 3GPP connection may include: the terminal performing horizontal derivation based on the initial key K_{gNB} and the first radio parameters of the first 3GPP connection, calculating the access network key K_{NG-RAN} associated with the first 3GPP connection, and using this access network key K_{NG-RAN} associated with the first 3GPP connection as the intermediate key associated with the first 3GPP connection.

For example, assume that the security parameters of the second 3GPP connection maintained by the terminal include {NCC1=0, initial key K_{gNB}}; further assume that the NCC associated with the first 3GPP connection received by the terminal is also NCC1. The terminal performs horizontal derivation based on the initial key K_{gNB} and the first radio parameters of the first 3GPP connection, calculates the access network key K_{NG-RAN-1} associated with the first 3GPP connection, and uses this access network key K_{NG-RAN-1} associated with the first 3GPP connection as the intermediate key associated with the first 3GPP connection. After the above processing, the terminal ultimately obtains {NCC1=0, K_{NG-RAN-1}} in the security parameters associated with the first 3GPP connection.

In another scenario, the intermediate key associated with the second 3GPP connection is a second NH. The terminal may use the intermediate key associated with the second 3GPP connection as the second intermediate key, i.e., the second intermediate key is the second NH.

The terminal calculating the intermediate key associated with the first 3GPP connection based on the second intermediate key and the first radio parameters of the first 3GPP connection may include: the terminal performing horizontal derivation based on the second NH and the first radio parameters of the first 3GPP connection, calculating the access network key K_{NG-RAN} associated with the first 3GPP connection, and using this access network key K_{NG-RAN} associated with the first 3GPP connection as the intermediate key associated with the first 3GPP connection.

For example, assume that the security parameters of the second 3GPP connection maintained by the terminal include {NCC1=1, NH1}, where NH1 is the second NH in this embodiment; further assume that the NCC associated with the first 3GPP connection received by the terminal is also NCC1. The terminal performs horizontal derivation based on NH1 and the first radio parameters of the first 3GPP connection, calculates the access network key K_{NG-RAN-2} associated with the first 3GPP connection, and uses this access network key K_{NG-RAN-2} associated with the first 3GPP connection as the intermediate key associated with the first 3GPP connection. After the above processing, the terminal ultimately obtains {NCC1=1, K_{NG-RAN-2}} in the security parameters associated with the first 3GPP connection.

In one scenario, the intermediate key associated with the second 3GPP connection is a second access network key K_{NG-RAN}. The terminal may use the intermediate key associated with the second 3GPP connection as the second intermediate key, i.e., the second intermediate key is the second access network key K_{NG-RAN}.

The terminal calculating the intermediate key associated with the first 3GPP connection based on the second intermediate key and the first radio parameters of the first 3GPP connection may include: the terminal performing horizontal derivation based on the second access network key K_{NG-RAN} and the first radio parameters of the first 3GPP connection, calculating the access network key K_{NG-RAN} associated with the first 3GPP connection, and using this access network key K_{NG-RAN} associated with the first 3GPP connection as the intermediate key associated with the first 3GPP connection.

For example, assume that the security parameters of the second 3GPP connection maintained by the terminal include {NCC1=1, K_{NG-RAN-1}}, where K_{NG-RAN-1} is the second access network key in this embodiment; further assume that the NCC associated with the first 3GPP connection received by the terminal is also NCC1. The terminal performs horizontal derivation based on K_{NG-RAN-1} and the first radio parameters of the first 3GPP connection, calculates the access network key K_{NG-RAN-2} associated with the first 3GPP connection, and uses this access network key K_{NG-RAN-2} associated with the first 3GPP connection as the intermediate key associated with the first 3GPP connection. After the above processing, the terminal ultimately obtains {NCC1=1, K_{NG-RAN-2}} in the security parameters associated with the first 3GPP connection.

In some possible examples, the access network key K_{NG-RAN} associated with the first 3GPP connection may also be alternatively denoted as K_{NG-RAN}*, or the above-mentioned access network key associated with the first 3GPP connection may also be referred to as a non-initial key K_{gNB}.

In this embodiment, the method for calculating the AS keys associated with the first 3GPP connection by the terminal is similar to that in the previous embodiments, and the content included in the AS keys associated with the first 3GPP connection is the same as in the previous embodiments. Therefore, no further elaboration is provided.

It should be noted that after the terminal calculates the AS keys associated with the first 3GPP connection based on the access network key associated with the first 3GPP connection, the terminal will associatively maintain or store the security parameters associated with the first 3GPP connection and the AS keys associated with the first 3GPP connection.

On the first access network device side, after receiving the key generation parameters associated with the first 3GPP connection, the AS keys associated with the first 3GPP connection may be derived. The following explains the related processing for deriving the AS keys associated with the first 3GPP connection on the first access network device side.

In this embodiment, the key generation parameters associated with the first 3GPP connection only include: the NCC associated with the first 3GPP connection. On the first access network device side, the AS keys associated with the first 3GPP connection are generated based on the intermediate key associated with the first 3GPP connection. The intermediate key associated with the first 3GPP connection is generated based on a second intermediate key and the first radio parameters of the first 3GPP connection, where the NCC corresponding to the second intermediate key is the same as the NCC associated with the first 3GPP connection.

The processing for the first access network device to derive the AS keys associated with the first 3GPP connection may include: the first access network device calculating the intermediate key associated with the first 3GPP connection based on the second intermediate key and the first radio parameters of the first 3GPP connection; and the first access network device calculating the AS keys associated with the first 3GPP connection based on the intermediate key associated with the first 3GPP connection. The intermediate key associated with the first 3GPP connection includes the access network key K_{NG-RAN} associated with the first 3GPP connection. The second intermediate key includes one of the following: the initial key K_{gNB}, a second NH, or a second access network key K_{NG-RAN}. Here, the explanation of the first radio parameters of the first 3GPP connection is the same as in the previous embodiments and will not be repeated.

Before the first access network device calculates the intermediate key associated with the first 3GPP connection based on the second intermediate key and the first radio parameters of the first 3GPP connection, the method on the first access network device side further includes: the first access network device obtaining the second intermediate key.

Specifically, the first access network device obtaining the second intermediate key may include: the first access network device obtaining the second intermediate key based on the NCC associated with the first 3GPP connection.

Optionally, if the first access network device locally maintains an intermediate key that is the same as the NCC associated with the first 3GPP connection and that was last generated and associated with one other 3GPP connection of the terminal, the first access network device may directly retrieve the intermediate key associated with the other 3GPP connection of the terminal from its local storage and use it as the second intermediate key.

Specifically, the first access network device obtaining the second intermediate key based on the NCC associated with the first 3GPP connection may include: the first access network device checking whether the NCC and intermediate key associated with each of the one or more other 3GPP connections of the terminal are saved locally. If so, and if an intermediate key associated with another 3GPP connection of the terminal is found, which corresponds to an NCC same as the NCC associated with the first 3GPP connection and was last generated or previously generated, then this intermediate key, which corresponds to the NCC same as the NCC associated with the first 3GPP connection and was last generated or previously generated for another 3GPP connection of the terminal, is used as the second intermediate key.

Optionally, if the first access network device does not locally maintain an intermediate key associated with another 3GPP connection of the terminal that corresponds to an NCC same as the NCC associated with the first 3GPP connection and was last generated, the first access network device may obtain, from another access network device, the intermediate key associated with another 3GPP connection of the terminal, which corresponds to the same NCC as the NCC associated with the first 3GPP connection and was last generated, and use it as the second intermediate key.

Specifically, the first access network device obtaining the second intermediate key based on the NCC associated with the first 3GPP connection may include: the first access network device checking whether the NCC and the intermediate key associated with each of one or more other 3GPP connections of the terminal are stored locally. If not, the first access network device obtains, from another access network device associated with another 3GPP connection of the terminal, an intermediate key associated with another 3GPP connection of the terminal, which corresponds to an NCC same as the NCC associated with the first 3GPP connection and was last generated or previously generated, and uses it as the second intermediate key.

Alternatively, the first access network device obtaining the second intermediate key based on the NCC associated with the first 3GPP connection may include: the first access network device checking whether the NCC and the intermediate key associated with each of one or more other 3GPP connections of the terminal are stored locally. If so, the first access network device further checks whether an intermediate key associated with another 3GPP connection of the terminal, that corresponds to an NCC same as the NCC associated with the first 3GPP connection and that was last generated or previously generated, is stored locally. If not, the first access network device obtains, from another access network device associated with another 3GPP connection of the terminal, such an intermediate key (i.e., one associated with another 3GPP connection of the terminal, corresponds to an NCC same as the NCC associated with the first 3GPP connection and was last generated or previously generated) and uses it as the second intermediate key.

The processing in which the first access network device calculates the intermediate key associated with the first 3GPP connection based on the second intermediate key and the first radio parameters of the first 3GPP connection is the same as the specific processing in which the terminal calculates the intermediate key associated with the first 3GPP connection based on the second intermediate key and the first radio parameters of the first 3GPP connection, as described earlier, and thus will not be repeated. The explanation of the AS keys associated with the first 3GPP connection and the processing in which the first access network device calculates the AS keys associated with the first 3GPP connection based on the intermediate key associated with the first 3GPP connection are also similar to the processing in which the terminal calculates the AS keys associated with the first 3GPP connection based on the access network key associated with the first 3GPP connection, and thus will not be repeated.

It should be noted that after the first access network device calculates or derives the AS keys associated with the first 3GPP connection, the first access network device side will associatively maintain or store the key generation parameters associated with the first 3GPP connection and the AS keys associated with the first 3GPP connection.

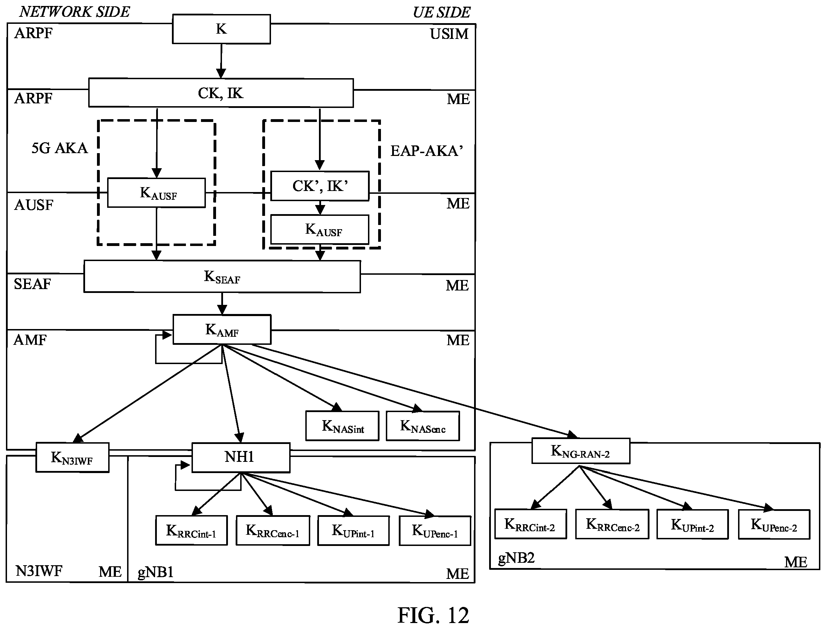

With reference to Figure 12, an exemplary description of the key derivation method in a scenario where the K_{AMF} associated with different 3GPP connections among the multiple 3GPP connections of the terminal are the same, while the NCCs associated with different 3GPP connections among the multiple 3GPP connections of the terminal are the same and the intermediate keys associated with different 3GPP connections are different is provided as follows.

Assume that the terminal has currently established a 3GPP connection 1 (i.e., the second 3GPP connection in the previous embodiment). Both the terminal side (specifically including ME and USIM as shown in FIG. 12) and the core network side device (indicated as the network side in FIG. 12) maintain the security parameters associated with 3GPP connection 1. The security parameters associated with 3GPP connection 1 include the K_{AMF} associated with 3GPP connection 1 (the same K_{AMF} is associated with all 3GPP connections of the terminal), the NCC1 associated with 3GPP connection 1, and the intermediate key associated with 3GPP connection 1. The intermediate key associated with 3GPP connection 1 may be NH1 as shown in FIG. 12 (i.e., the second NH in the previous embodiment). Furthermore, the terminal and the gNB corresponding to 3GPP connection 1 (denoted as gNB1 in FIG. 12 for 3GPP connection 1) maintain the AS keys associated with 3GPP connection 1. In the process of deriving the AS keys associated with 3GPP connection 1, the terminal and gNB1 may first derive K_{gNB1} based on NH1, and then derive the AS keys associated with 3GPP connection 1 based on K_{gNB1}. The AS keys associated with 3GPP connection 1 are indicated in FIG. 12 as: K_{RRCint-1}, K_{RRCenc-1}, K_{UPint-1}, and K_{UPenc-1}. It should be understood that in actual processing, the AS keys associated with 3GPP connection 1 may include at least one of the following four keys illustrated in FIG. 12: K_{RRCint-1}, K_{RRCenc-1}, K_{UPint-1}, and K_{UPenc-1}.

Subsequently, the terminal initiates a first procedure via 3GPP connection 2 (i.e., the first 3GPP connection in the previous embodiment). During the execution of the first procedure, the core network side device reallocates NCC1 associated with 3GPP connection 1 to 3GPP connection 2, meaning that NCC1 is also associated with 3GPP connection 2. The core network side device (e.g., AMF) sends NCC1 associated with 3GPP connection 2 to the terminal, and sends NCC1 to the gNB corresponding to 3GPP connection 2 (denoted as gNB2 in FIG. 12 for 3GPP connection 2).

The terminal and gNB2, based on the received NCC1 of 3GPP connection 2, determine that the second intermediate key is NH1, derive the intermediate key associated with 3GPP connection 2 (i.e., K_{NG-RAN-2} as indicated in FIG. 12) based on NH1 and the first radio parameters of 3GPP connection 2; and derive the AS keys associated with 3GPP connection 2 based on K_{NG-RAN-2} associated with 3GPP connection 2. The AS keys associated with 3GPP connection 2 are indicated in FIG 12 as: K_{RRCint-2}, K_{RRCenc-2}, K_{UPint-2}, and K_{UPenc-2}. It should be understood that in actual processing, the AS keys associated with 3GPP connection 2 may include at least one of the following four keys illustrated in Figure 12: K_{RRCint-2}, K_{RRCenc-2}, K_{UPint-2}, and K_{UPenc-2}.

Regarding the example in FIG. 12, it should be further noted that, for clarity, gNB1 corresponding to 3GPP connection 1 and gNB2 corresponding to 3GPP connection 2 are illustrated separately. In actual scenarios, gNB1 and gNB2 may be the same device or different devices, both of which fall within the scope of protection of this embodiment and will not be elaborated here. Additionally, FIG. 12 also illustrates the related keys derived by network elements such as ARPF, AUSF, SEAF, and N3IWF. The relevant descriptions of these keys have been detailed earlier and therefore will not be repeated here.

In some embodiments, the NCCs associated with different 3GPP connections among the multiple 3GPP connections of the terminal are the same, and the intermediate keys associated with different 3GPP connections are also the same.

The core network side device may allocate, for the 3GPP connection first established by the terminal, the NCC associated with the first established 3GPP connection and the initial key K_{gNB} or NH associated with the first established 3GPP connection. The manner in which the core network side device derives the initial key K_{gNB} or NH for the 3GPP connection first established by the terminal may be based on the same K_{AMF} associated with the multiple 3GPP connections of the terminal. The specific derivation method is not elaborated here. However, the first 3GPP connection is any 3GPP connection among the multiple 3GPP connections of the terminal that is not the first established and/or any 3GPP connection among the multiple 3GPP connections of the terminal for which AS keys are not first derived. In this embodiment, the core network side device does not generate a new intermediate key for the first 3GPP connection, nor does it allocate a new NCC for the first 3GPP connection. Instead, it uses the NCC associated with other historically established 3GPP connections as the NCC associated with the first 3GPP connection, and uses the intermediate key associated with other 3GPP connections as the intermediate key associated with the first 3GPP connection. Here, the other historically established 3GPP connections of the terminal may include the 3GPP connection first established by the terminal.

After obtaining the NCC associated with the first 3GPP connection and the intermediate key associated with the first 3GPP connection, the core network side device may perform the following processing: sending the NCC associated with the first 3GPP connection to the terminal; and sending the key generation parameters associated with the first 3GPP connection to the first access network device corresponding to the first 3GPP connection. In this embodiment, the key generation parameters associated with the first 3GPP connection include: the NCC associated with the first 3GPP connection and the intermediate key associated with the first 3GPP connection. The intermediate key associated with the first 3GPP connection includes one of the following: the initial key K_{gNB} or the NH associated with the first 3GPP connection.

It should be noted that after obtaining the NCC associated with the first 3GPP connection and the intermediate key associated with the first 3GPP connection, the core network side device will associatively maintain or store the K_{AMF} associated with the first 3GPP connection, the NCC associated with the first 3GPP connection, and the intermediate key associated with the first 3GPP connection.

On the terminal side, after receiving the NCC associated with the first 3GPP connection, the processing for deriving the AS keys associated with the first 3GPP connection may be performed. The following explains the related processing for deriving the AS keys associated with the first 3GPP connection on the terminal side.

On the terminal side, the security parameters associated with the first 3GPP connection may include the NCC associated with the first 3GPP connection, meaning the terminal may first treat the NCC associated with the first 3GPP connection as one of the security parameters associated with the first 3GPP connection. Further, the security parameters associated with the first 3GPP connection may also include at least one of the following: the K_{AMF} associated with the first 3GPP connection and the intermediate key associated with the first 3GPP connection.

The AS keys associated with the first 3GPP connection are derived based on the intermediate key associated with the first 3GPP connection and the second radio parameters of the first 3GPP connection. Here, the intermediate key associated with the first 3GPP connection is obtained based on the NCC associated with the first 3GPP connection, and the second radio parameters of different 3GPP connections among the multiple 3GPP connections of the terminal are different.

Specifically, the AS keys associated with the first 3GPP connection are derived based on the access network key K_{NG-RAN} associated with the first 3GPP connection and the second radio parameters of the first 3GPP connection. The access network key K_{NG-RAN} associated with the first 3GPP connection is derived based on the intermediate key associated with the first 3GPP connection and the first radio parameters of the first 3GPP connection.

More specifically, the processing for the terminal side to derive the AS keys associated with the first 3GPP connection may include: the terminal obtaining the intermediate key associated with the first 3GPP connection based on the NCC associated with the first 3GPP connection; the terminal calculating the access network key K_{NG-RAN} associated with the first 3GPP connection based on the intermediate key associated with the first 3GPP connection and the first radio parameters of the first 3GPP connection; and the terminal calculating the AS keys associated with the first 3GPP connection based on the access network key K_{NG-RAN} associated with the first 3GPP connection and the second radio parameters of the first 3GPP connection.

Here, the terminal obtaining the intermediate key associated with the first 3GPP connection based on the NCC associated with the first 3GPP connection may include: the terminal obtaining, based on the NCC associated with the first 3GPP connection, a locally stored intermediate key associated with another 3GPP connection which has an NCC same as the NCC associated with the first 3GPP connection, and using this intermediate key associated with another 3GPP connection that has the NCC same as the NCC associated with the first 3GPP connection as the intermediate key associated with the first 3GPP connection.

The terminal calculating the access network key K_{NG-RAN} associated with the first 3GPP connection based on the intermediate key associated with the first 3GPP connection and the first radio parameters of the first 3GPP connection may include: the terminal performing horizontal derivation based on the intermediate key associated with the first 3GPP connection and the first radio parameters of the first 3GPP connection to obtain the access network key K_{NG-RAN} associated with the first 3GPP connection. In some possible examples, the access network key K_{NG-RAN} associated with the first 3GPP connection may also be alternatively denoted as K_{NG-RAN}*, or the above-mentioned access network key associated with the first 3GPP connection may also be referred to as a non-initial key K_{gNB}.

The terminal calculating the AS keys associated with the first 3GPP connection based on the access network key K_{NG-RAN} associated with the first 3GPP connection and the second radio parameters of the first 3GPP connection may include at least one of the following: the terminal calculating K_{RRCint} associated with the first 3GPP connection based on a specified first integrity key generation algorithm, the access network key K_{NG-RAN} associated with the first 3GPP connection, and the second radio parameters of the first 3GPP connection; calculating K_{UPint} associated with the first 3GPP connection based on a specified second integrity key generation algorithm, the access network key K_{NG-RAN} associated with the first 3GPP connection, and the second radio parameters of the first 3GPP connection; calculating K_{RRCenc} associated with the first 3GPP connection based on a specified first encryption key generation algorithm, the access network key K_{NG-RAN} associated with the first 3GPP connection, and the second radio parameters of the first 3GPP connection; and calculating K_{UPenc} associated with the first 3GPP connection based on a specified second encryption key generation algorithm, the access network key K_{NG-RAN} associated with the first 3GPP connection, and the second radio parameters of the first 3GPP connection.

The first radio parameters of the first 3GPP connection include at least one of the following: the cell identifier corresponding to the first 3GPP connection, the uplink (UL) frequency information corresponding to the first 3GPP connection, the downlink (DL) frequency information corresponding to the first 3GPP connection, the tracking area code (TAC) corresponding to the first 3GPP connection, and the radio bearer identifier corresponding to the first 3GPP connection.

The second radio parameters of the first 3GPP connection include at least one of the following: the cell identifier corresponding to the first 3GPP connection, the UL frequency information corresponding to the first 3GPP connection, the DL frequency information corresponding to the first 3GPP connection, the TAC corresponding to the first 3GPP connection, and the radio bearer identifier corresponding to the first 3GPP connection.

It should be understood that the above is only an exemplary description of the first radio parameters and the second radio parameters of the first 3GPP connection. In actual processing, the parameters may include but are not limited to the specific contents listed above. This embodiment does not limit or exhaustively enumerate them.

It should also be understood that the first radio parameters and the second radio parameters of the first 3GPP connection may be the same or different. That is, at least one parameter may be selected from the cell identifier corresponding to the first 3GPP connection, the UL frequency information corresponding to the first 3GPP connection, the DL frequency information corresponding to the first 3GPP connection, the TAC corresponding to the first 3GPP connection, and the radio bearer identifier corresponding to the first 3GPP connection as the first radio parameters of the first 3GPP connection. Similarly, at least one parameter may be selected from the cell identifier corresponding to the first 3GPP connection, the UL frequency information corresponding to the first 3GPP connection, the DL frequency information corresponding to the first 3GPP connection, the TAC corresponding to the first 3GPP connection, and the radio bearer identifier corresponding to the first 3GPP connection as the second radio parameters of the first 3GPP connection. The parameters selected in the two instances may be the same or different.

Optionally, the first radio parameters of the first 3GPP connection are the same as the second radio parameters of the first 3GPP connection.

For example, both the first radio parameters and the second radio parameters of the first 3GPP connection may include: the cell identifier corresponding to the first 3GPP connection (e.g., denoted as PCI) and the DL frequency (or frequency point) information corresponding to the first 3GPP connection. For example, both the first radio parameters and the second radio parameters of the first 3GPP connection may include: the UL frequency (or frequency point) information corresponding to the first 3GPP connection, the DL frequency (or frequency point) information corresponding to the first 3GPP connection, the TAC corresponding to the first 3GPP connection, and the radio bearer identifier corresponding to the first 3GPP connection. For example, both the first radio parameters and the second radio parameters of the first 3GPP connection may include: the cell identifier corresponding to the first 3GPP connection (e.g., denoted as PCI), the UL frequency (or frequency point) information corresponding to the first 3GPP connection, and the TAC corresponding to the first 3GPP connection. This is only an exemplary description, and all possible scenarios where the first radio parameters of the first 3GPP connection are the same as the second radio parameters of the first 3GPP connection are not exhaustively enumerated or limited.

Optionally, the first radio parameters of the first 3GPP connection are at least partially different from the second radio parameters of the first 3GPP connection.

In one scenario, the first radio parameters of the first 3GPP connection and the second radio parameters of the first 3GPP connection have some parameters that are the same and some parameters that are different.

For example, the first radio parameters of the first 3GPP connection include: the cell identifier corresponding to the first 3GPP connection (e.g., denoted as PCI) and the DL frequency (or frequency point) information corresponding to the first 3GPP connection. The second radio parameters of the first 3GPP connection may include the UL frequency (or frequency point) information corresponding to the first 3GPP connection and the DL frequency (or frequency point) information corresponding to the first 3GPP connection.

For example, the first radio parameters of the first 3GPP connection may only include the cell identifier corresponding to the first 3GPP connection (e.g., denoted as PCI). The second radio parameters of the first 3GPP connection may include: the cell identifier corresponding to the first 3GPP connection (e.g., denoted as PCI), the UL frequency (or frequency point) information corresponding to the first 3GPP connection, the DL frequency (or frequency point) information corresponding to the first 3GPP connection, the TAC corresponding to the first 3GPP connection, and the radio bearer identifier corresponding to the first 3GPP connection.

For example, the first radio parameters of the first 3GPP connection include: the cell identifier corresponding to the first 3GPP connection (e.g., denoted as PCI), the UL frequency (or frequency point) information corresponding to the first 3GPP connection, the DL frequency (or frequency point) information corresponding to the first 3GPP connection, and the TAC corresponding to the first 3GPP connection. The second radio parameters of the first 3GPP connection may include the DL frequency (or frequency point) information corresponding to the first 3GPP connection, the TAC corresponding to the first 3GPP connection, and the radio bearer identifier corresponding to the first 3GPP connection.

The above are only exemplary descriptions. As long as the first radio parameters of the first 3GPP connection and the second radio parameters of the first 3GPP connection have some parameters that are the same and some that are different, and the parameters contained in the first radio parameters and the second radio parameters of the first 3GPP connection are at least one of the following: the cell identifier corresponding to the first 3GPP connection, the UL frequency information corresponding to the first 3GPP connection, the DL frequency information corresponding to the first 3GPP connection, the TAC corresponding to the first 3GPP connection, the radio bearer identifier corresponding to the first 3GPP connection, and other possible parameters, it falls within the scope of protection of this embodiment. No limitation or exhaustive enumeration is imposed here.

In one scenario, the first radio parameters of the first 3GPP connection and the second radio parameters of the first 3GPP connection are completely different.

For example, the first radio parameters of the first 3GPP connection include at least one of the following: the cell identifier corresponding to the first 3GPP connection (e.g., denoted as PCI) and the DL frequency (or frequency point) information corresponding to the first 3GPP connection. The second radio parameters of the first 3GPP connection may include at least one of the following: the UL frequency (or frequency point) information corresponding to the first 3GPP connection, the TAC corresponding to the first 3GPP connection, and the radio bearer identifier corresponding to the first 3GPP connection.

For example, the first radio parameters of the first 3GPP connection may only include the cell identifier corresponding to the first 3GPP connection (e.g., denoted as PCI). The second radio parameters of the first 3GPP connection may include at least one of the following: the UL frequency (or frequency point) information corresponding to the first 3GPP connection, the DL frequency (or frequency point) information corresponding to the first 3GPP connection, the TAC corresponding to the first 3GPP connection, and the radio bearer identifier corresponding to the first 3GPP connection.

For example, the first radio parameters of the first 3GPP connection include at least one of the following: the cell identifier corresponding to the first 3GPP connection (e.g., denoted as PCI), the UL frequency (or frequency point) information corresponding to the first 3GPP connection, and the DL frequency (or frequency point) information corresponding to the first 3GPP connection. The second radio parameters of the first 3GPP connection may include at least one of the following: the TAC corresponding to the first 3GPP connection and the radio bearer identifier corresponding to the first 3GPP connection.

It should be understood that the above are only exemplary descriptions of the first radio parameters and the second radio parameters of the first 3GPP connection. In actual processing, the parameter types may include but are not limited to the examples above, and the possible combinations are not limited to those provided in the examples. This embodiment does not impose exhaustive enumeration or limitations.

On the first access network device side, after receiving the key generation parameters associated with the first 3GPP connection, the AS keys associated with the first 3GPP connection may be derived. The following explains the related processing for deriving the AS keys associated with the first 3GPP connection on the first access network device side.

The key generation parameters associated with the first 3GPP connection include: the NCC associated with the first 3GPP connection and the intermediate key associated with the first 3GPP connection.

On the first access network device side, the AS keys associated with the first 3GPP connection are derived based on the intermediate key associated with the first 3GPP connection and the second radio parameters of the first 3GPP connection, where the second radio parameters of different 3GPP connections among the multiple 3GPP connections of the terminal are different. Specifically, the AS keys associated with the first 3GPP connection are derived based on the access network key K_{NG-RAN} associated with the first 3GPP connection and the second radio parameters of the first 3GPP connection. The K_{NG-RAN} associated with the first 3GPP connection is derived based on the intermediate key associated with the first 3GPP connection and the first radio parameters of the first 3GPP connection.

More specifically, the processing for the first access network device to derive the AS keys associated with the first 3GPP connection may include: the first access network device calculating the access network key K_{NG-RAN} associated with the first 3GPP connection based on the intermediate key associated with the first 3GPP connection and the first radio parameters of the first 3GPP connection; and the first access network device calculating the AS keys associated with the first 3GPP connection based on the access network key associated with the first 3GPP connection and the second radio parameters of the first 3GPP connection.

Here, the processing in which the first access network device calculates the access network key K_{NG-RAN} associated with the first 3GPP connection based on the intermediate key associated with the first 3GPP connection and the first radio parameters of the first 3GPP connection is the same as the specific processing in which the terminal calculates the access network key K_{NG-RAN} associated with the first 3GPP connection based on the intermediate key associated with the first 3GPP connection and the first radio parameters of the first 3GPP connection, as described earlier, and thus will not be repeated. The explanation of the AS keys associated with the first 3GPP connection and the processing in which the first access network device calculates the AS keys associated with the first 3GPP connection based on the access network key associated with the first 3GPP connection and the second radio parameters of the first 3GPP connection are also the same as the processing in which the terminal calculates the AS keys associated with the first 3GPP connection based on the access network key associated with the first 3GPP connection and the second radio parameters of the first 3GPP connection, and thus will not be repeated.

It should be noted that after the first access network device calculates the AS keys associated with the first 3GPP connection based on the access network key associated with the first 3GPP connection, the first access network device side will associatively maintain or store the key generation parameters associated with the first 3GPP connection and the AS keys associated with the first 3GPP connection.

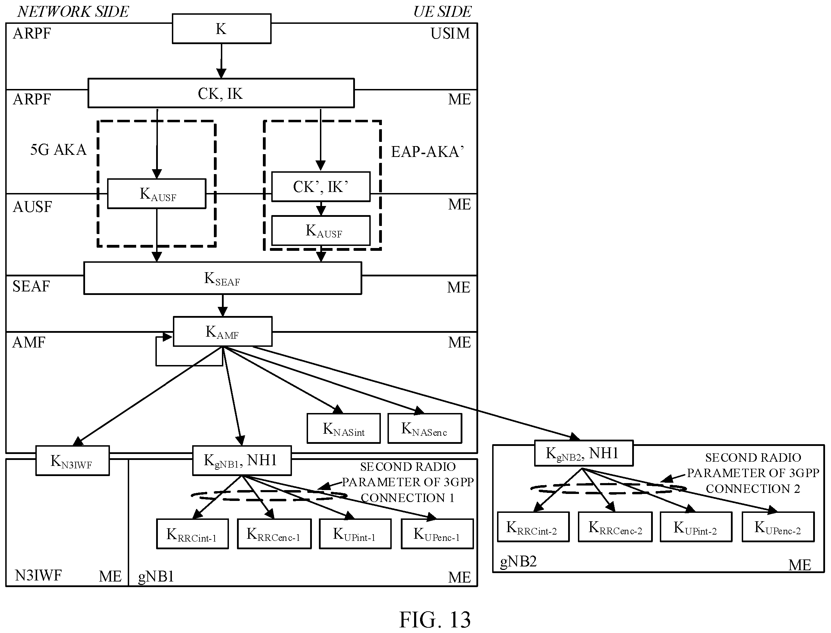

With reference to FIG. 13, an exemplary description of the key derivation method in a scenario where the K_{AMF} associated with different 3GPP connections among the multiple 3GPP connections of the terminal are the same, while the NCCs associated with different 3GPP connections among the multiple 3GPP connections of the terminal are the same and the intermediate keys associated with different 3GPP connections are also the same is provided as follows.

Assume that the terminal has currently established a 3GPP connection 1. Both the terminal side (specifically including ME and USIM as shown in FIG. 13) and the core network side device (indicated as the network side in FIG. 13) maintain the K_{AMF} associated with 3GPP connection 1 (the same K_{AMF} is associated with all 3GPP connections of the terminal), the NCC1 associated with 3GPP connection 1, and the intermediate key associated with 3GPP connection 1. The intermediate key associated with 3GPP connection 1 may be NH1 as shown in Figure 13. Furthermore, the terminal and the gNB corresponding to 3GPP connection 1 (denoted as gNB1 in FIG. 13 for 3GPP connection 1) maintain the AS keys associated with 3GPP connection 1. In the process of deriving the AS keys associated with 3GPP connection 1, the terminal may first derive K_{gNB1} (or K_{NG-RAN} associated with 3GPP connection 1) as shown in FIG. 13 based on NH1, and then derive the AS keys associated with 3GPP connection 1 based on K_{gNB1} and the second radio parameters of 3GPP connection 1. The AS keys associated with 3GPP connection 1 are indicated in FIG. 13 as: K_{RRCint-1}, K_{RRCenc-1}, K_{UPint-1}, and K_{UPenc-1}. It should be understood that in actual processing, the AS keys associated with 3GPP connection 1 may include at least one of the following four keys illustrated in FIG. 13: K_{RRCint-1}, K_{RRCenc-1}, K_{UPint-1}, and K_{UPenc-1}.

Subsequently, the terminal initiates a first procedure via 3GPP connection 2 (i.e., the first 3GPP connection in the previous embodiment). During the execution of the first procedure, the core network side device allocates NCC1 associated with 3GPP connection 1 to 3GPP connection 2 and allocates NH1 associated with 3GPP connection 1 to 3GPP connection 2. The core network side device (e.g., AMF) sends NCC1 associated with 3GPP connection 2 to the terminal, and sends NCC1 and NH1 to the gNB corresponding to 3GPP connection 2 (denoted as gNB2 in FIG. 13 for 3GPP connection 2).

The terminal obtains NH1 based on NCC1 associated with 3GPP connection 2. At the terminal and the gNB corresponding to 3GPP connection 2 (denoted as gNB2 in FIG. 13 for 3GPP connection 2), the AS keys associated with 3GPP connection 2 are derived based on NH1 and the second radio parameters of 3GPP connection 2. In the process of deriving the AS keys associated with 3GPP connection 2 by the terminal and gNB2, K_{gNB2} (or K_{NG-RAN} associated with 3GPP connection 2) as shown in FIG. 13 may first be derived based on NH1 and the first radio parameters of 3GPP connection 2, and then the AS keys associated with 3GPP connection 2 may be derived based on K_{gNB2} and the second radio parameters of 3GPP connection 2. The AS keys associated with 3GPP connection 2 are indicated in FIG. 13 as: K_{RRCint-2}, K_{RRCenc-2}, K_{UPint-2}, and K_{UPenc-2}. It should be understood that in actual processing, the AS keys associated with 3GPP connection 2 may include at least one of the following four keys illustrated in FIG. 13: K_{RRCint-2}, K_{RRCenc-2}, K_{UPint-2}, and K_{UPenc-2}.

Regarding the example in FIG. 13, it should be further noted that, for clarity, gNB1 corresponding to 3GPP connection 1 and gNB2 corresponding to 3GPP connection 2 are illustrated separately. In actual scenarios, gNB1 and gNB2 may be the same device or different devices, both of which fall within the scope of protection of this embodiment and will not be elaborated here. Additionally, FIG. 13 also illustrates the related keys derived by network elements such as ARPF, AUSF, SEAF, and N3IWF. The relevant descriptions of these keys have been detailed earlier and therefore will not be repeated here.

In some possible implementations, the first keys (K_{AMF}) associated with different 3GPP connections among the multiple 3GPP connections of the terminal are different.

In this implementation, the first keys K_{AMF} associated with different 3GPP connections of the terminal are different first keys K_{AMF}. That is, both the terminal side and the core network device side need to maintain multiple sets of first keys K_{AMF} for the terminal and the core network side device, and different first keys K_{AMF} are associated with different 3GPP connections of the terminal.

On the core network side device side, the intermediate key associated with the first 3GPP connection is derived based on the first key K_{AMF} associated with the first 3GPP connection. The intermediate key associated with the first 3GPP connection includes one of the following: the initial key K_{gNB} associated with the first 3GPP connection, or the NH associated with the first 3GPP connection.

The core network side device may determine the NCC associated with the first 3GPP connection. The NCC associated with the first 3GPP connection may be used to indicate the number of times the intermediate key associated with the first 3GPP connection is derived from the initial key K_{gNB} associated with the first 3GPP connection.

In one scenario, the NCC associated with the first 3GPP connection may be an initial value (e.g., 0), and the intermediate key associated with the first 3GPP connection is the initial key K_{gNB} associated with the first 3GPP connection. Since the K_{AMF} associated with different 3GPP connections of the terminal are different, the K_{gNB} associated with different 3GPP connections of the terminal derived based on different K_{AMF} are also different.

In another scenario, the NCC associated with the first 3GPP connection may be a non-initial value (e.g., not 0), and the intermediate key associated with the first 3GPP connection is the NH associated with the first 3GPP connection. Since the K_{AMF} associated with different 3GPP connections of the terminal are different, the NH (i.e., intermediate key) associated with different 3GPP connections of the terminal derived based on different K_{AMF} are also different.

The core network side device may use a key generation algorithm to compute the K_{AMF} associated with the first 3GPP connection of the terminal, thereby obtaining the intermediate key associated with the first 3GPP connection. Here, the number of derivation or deduction calculations performed by the core network side device to compute the intermediate key associated with the first 3GPP connection equals the difference between the NCC associated with the first 3GPP connection and the NCC corresponding to the previous intermediate key associated with the first 3GPP connection.

For example, assume the core network side device maintains the initial key K_{gNB} associated with the first 3GPP connection of the terminal, and assume the NCC associated with the first 3GPP connection is not 0. The manner in which the core network side device derives the NH associated with the first 3GPP connection may be based on the K_{AMF} associated with the first 3GPP connection of the terminal and the initial key K_{gNB} associated with the first 3GPP connection to derive the NH associated with the first 3GPP connection. The number of derivation calculations performed by the core network side device in deriving the NH associated with the first 3GPP connection may be one or more times. In any derivation calculation during the process of computing the NH associated with the first 3GPP connection, the calculation formula used by the core network side device may be KDF (Key, S), where KDF() is the KDF calculation function, Key is the K_{AMF} associated with the first 3GPP connection of the terminal, and S includes the last derived key (e.g., the K_{gNB} associated with the first 3GPP connection or the last derived NH).

The processing by the core network side device for each 3GPP connection of the terminal is similar to that for the first 3GPP connection described above, except that the K_{AMF} associated with different 3GPP connections are different. Therefore, the processing for each 3GPP connection is not elaborated one by one here.

After obtaining the NCC associated with the first 3GPP connection and the intermediate key associated with the first 3GPP connection, the core network side device may perform the following processing: sending the NCC associated with the first 3GPP connection to the terminal; and sending the key generation parameters associated with the first 3GPP connection to the first access network device corresponding to the first 3GPP connection. In this embodiment, the key generation parameters associated with the first 3GPP connection include: the NCC associated with the first 3GPP connection; and the key generation parameters associated with the first 3GPP connection also include: the intermediate key associated with the first 3GPP connection.

It should be noted that after obtaining the NCC associated with the first 3GPP connection and the intermediate key associated with the first 3GPP connection, the core network side device will associatively maintain or store the K_{AMF} associated with the first 3GPP connection, the NCC associated with the first 3GPP connection, and the intermediate key associated with the first 3GPP connection.

On the terminal side, after receiving the NCC associated with the first 3GPP connection, the processing for deriving the AS keys associated with the first 3GPP connection may be performed. The following explains the related processing for deriving the AS keys associated with the first 3GPP connection on the terminal side.

The security parameters associated with the first 3GPP connection may include the NCC associated with the first 3GPP connection, meaning the terminal may first treat the NCC associated with the first 3GPP connection as one of the security parameters associated with the first 3GPP connection. Further, the security parameters associated with the first 3GPP connection may also include at least one of the following: the K_{AMF} associated with the first 3GPP connection and the intermediate key associated with the first 3GPP connection.

On the terminal side, the AS keys associated with the first 3GPP connection are derived based on the intermediate key associated with the first 3GPP connection. The intermediate key associated with the first 3GPP connection is derived based on the NCC associated with the first 3GPP connection and the K_{AMF} associated with the first 3GPP connection. Here, the intermediate key associated with the first 3GPP connection includes one of the following: the initial key K_{gNB} associated with the first 3GPP connection, or the NH associated with the first 3GPP connection.

Specifically, the processing for the terminal side to derive the AS keys associated with the first 3GPP connection may include: the terminal calculating the intermediate key associated with the first 3GPP connection based on the K_{AMF} associated with the first 3GPP connection and the NCC associated with the first 3GPP connection; the terminal calculating the access network key K_{NG-RAN} associated with the first 3GPP connection based on the intermediate key associated with the first 3GPP connection and the first radio parameters of the first 3GPP connection; and the terminal calculating the AS keys associated with the first 3GPP connection based on the access network key associated with the first 3GPP connection.

In one scenario, the NCC associated with the first 3GPP connection may be equal to the initial value, i.e., 0. The terminal may use the initial key K_{gNB} associated with the first 3GPP connection as the intermediate key associated with the first 3GPP connection.

In another scenario, the NCC associated with the first 3GPP connection may not be equal to 0. The terminal calculating the intermediate key associated with the first 3GPP connection based on the K_{AMF} associated with the first 3GPP connection and the NCC associated with the first 3GPP connection may include: determining the number of derivation calculations (or deduction calculations) based on the NCC associated with the first 3GPP connection, and using a key generation algorithm to derive the NH associated with the first 3GPP connection based on the K_{AMF} associated with the first 3GPP connection and the number of derivation calculations. The key generation algorithm is the same as in the previous embodiments and will not be repeated.

Here, the number of derivation calculations may be equal to the NCC associated with the first 3GPP connection. Alternatively, if the first 3GPP connection has already been allocated an NCC one or more times, the number of derivation calculations may be equal to the difference between the previous NCC associated with the first 3GPP connection and the current NCC. In any derivation calculation during the process of deriving the NH associated with the first 3GPP connection, the calculation formula used by the terminal may be KDF (Key, S), where KDF() is the KDF calculation function, Key is the same K_{AMF} associated with the multiple 3GPP connections of the terminal, and S includes the key derived last time (e.g., the initial key K_{gNB} associated with the first 3GPP connection or the NH derived last time).

The terminal calculating the access network key K_{NG-RAN} associated with the first 3GPP connection based on the intermediate key associated with the first 3GPP connection and the first radio parameters of the first 3GPP connection may include: the terminal performing horizontal derivation based on the intermediate key associated with the first 3GPP connection and the first radio parameters of the first 3GPP connection to obtain the access network key K_{NG-RAN} associated with the first 3GPP connection. In some possible examples, the access network key K_{NG-RAN} associated with the first 3GPP connection may also be alternatively denoted as K_{NG-RAN}*, or the above-mentioned access network key associated with the first 3GPP connection may also be referred to as a non-initial key K_{gNB}. The explanation of the first radio parameters of the first 3GPP connection is the same as in the previous embodiments and will not be repeated.

The processing in which the terminal calculates the AS keys associated with the first 3GPP connection based on the access network key associated with the first 3GPP connection is also the same as in the previous embodiments and will not be repeated.

It should be noted that after the terminal calculates the AS keys associated with the first 3GPP connection based on the access network key associated with the first 3GPP connection, the terminal will associatively maintain or store the security parameters associated with the first 3GPP connection and the AS keys associated with the first 3GPP connection.

On the first access network device side, after receiving the key generation parameters associated with the first 3GPP connection, the AS keys associated with the first 3GPP connection may be derived. The following explains the related processing for deriving the AS keys associated with the first 3GPP connection on the first access network device side.

The key generation parameters associated with the first 3GPP connection include: the NCC associated with the first 3GPP connection and the intermediate key associated with the first 3GPP connection.

On the first access network device side, the AS keys associated with the first 3GPP connection are derived based on the intermediate key associated with the first 3GPP connection.

Specifically, the processing for the first access network device to derive the AS keys associated with the first 3GPP connection may include: the first access network device calculating the access network key K_{NG-RAN} associated with the first 3GPP connection based on the intermediate key associated with the first 3GPP connection and the first radio parameters of the first 3GPP connection; and the first access network device calculating the AS keys associated with the first 3GPP connection based on the access network key associated with the first 3GPP connection.

Here, the specific explanation of the first access network device calculating the access network key K_{NG-RAN} associated with the first 3GPP connection based on the intermediate key associated with the first 3GPP connection and the first radio parameters of the first 3GPP connection is the same as the specific processing in which the terminal calculates the access network key K_{NG-RAN} associated with the first 3GPP connection based on the intermediate key associated with the first 3GPP connection and the first radio parameters of the first 3GPP connection, as described earlier, and thus will not be repeated. The explanation of the AS keys associated with the first 3GPP connection and the processing in which the first access network device calculates the AS keys associated with the first 3GPP connection based on the access network key associated with the first 3GPP connection are also the same as the processing in which the terminal calculates the AS keys associated with the first 3GPP connection based on the access network key associated with the first 3GPP connection, and thus will not be repeated.

It should be noted that after the first access network device calculates the AS keys associated with the first 3GPP connection based on the access network key associated with the first 3GPP connection, the first access network device side will associatively maintain or store the key generation parameters associated with the first 3GPP connection and the AS keys associated with the first 3GPP connection.

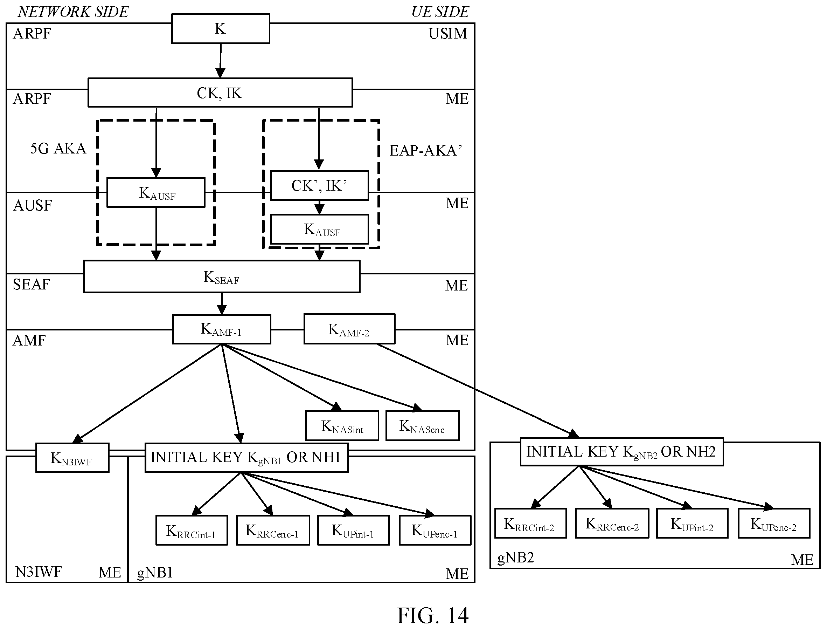

With reference to FIG. 14, an exemplary description of the key derivation method in a scenario where the K_{AMF} associated with different 3GPP connections among the multiple 3GPP connections of the terminal are different is provided as follows.

Assume that the terminal has currently established a 3GPP connection 1. Both the terminal side (specifically including ME and USIM as shown in FIG. 14) and the core network side device (indicated as the network side in FIG. 14) maintain the K_{AMF} associated with 3GPP connection 1 (shown as K_{AMF-1} in Figure 14), the NCC1 associated with 3GPP connection 1, and the intermediate key associated with 3GPP connection 1. The intermediate key associated with 3GPP connection 1 may be the initial key K_{gNB1} or NH1 as shown in FIG. 14. Furthermore, the terminal and the gNB corresponding to 3GPP connection 1 (denoted as gNB1 in FIG. 14 for 3GPP connection 1) maintain the AS keys associated with 3GPP connection 1. The AS keys associated with 3GPP connection 1 are indicated in FIG. 14 as: K_{RRCint-1}, K_{RRCenc-1}, K_{UPint-1}, and K_{UPenc-1}. It should be understood that in actual processing, the AS keys associated with 3GPP connection 1 may include at least one of the following four keys illustrated in FIG. 14: K_{RRCint-1}, KRRCenc-1, K_{UPint-1}, and K_{UPenc-1}.

Subsequently, the terminal initiates a first procedure via 3GPP connection 2 (i.e., the first 3GPP connection in the previous embodiment). During the execution of the first procedure, the core network side device derives the initial key K_{gNB2} or NH2 associated with 3GPP connection 2 based on K_{AMF-2} associated with 3GPP connection 2. The core network side device (e.g., AMF) sends NCC2 associated with 3GPP connection 2 to the terminal, and sends NCC2 associated with 3GPP connection 2 and the initial key K_{gNB-2} or NH2 associated with 3GPP connection 2 to the gNB corresponding to 3GPP connection 2 (denoted as gNB2 in FIG. 14 for 3GPP connection 2).

The terminal derives the intermediate key associated with 3GPP connection 2 (i.e., the initial key K_{gNB2} or NH2 as indicated in FIG. 14) based on NCC2 of 3GPP connection 2 and the K_{AMF} associated with 3GPP connection 2 (shown as K_{AMF-2} in Figure 14). The terminal and gNB2 derive the AS keys associated with 3GPP connection 2, which are indicated in FIG. 14 as: K_{RRCint-2}, K_{RRCenc-2}, K_{UPint-2}, and K_{UPenc-2}. It should be understood that in actual processing, the AS keys associated with 3GPP connection 2 may include at least one of the following four keys illustrated in FIG. 14: K_{RRCint-2}, K_{RRCenc-2}, K_{UPint-2}, and K_{UPenc-2}.

Regarding the example in FIG. 14, it should be further noted that, for clarity, gNB1 corresponding to 3GPP connection 1 and gNB2 corresponding to 3GPP connection 2 are illustrated separately. In actual scenarios, gNB1 and gNB2 may be the same device or different devices, both of which fall within the scope of protection of this embodiment and will not be elaborated here. Additionally, FIG. 14 also illustrates the related keys derived by network elements such as ARPF, AUSF, SEAF, and N3IWF. The relevant descriptions of these keys have been detailed earlier and therefore will not be repeated here.

In some possible implementations, before receiving the NCC associated with the first 3GPP connection, the terminal may include: the terminal initiating a first procedure via the first 3GPP connection corresponding to the first access network device.

Here, the first procedure may be any NAS (Non-Access Stratum) related procedure. For example, during the execution of this first procedure, at least one of the NCC associated with the first 3GPP connection and the intermediate key associated with the first 3GPP connection may be allocated or updated. For instance, the first procedure may be any one of the following types: a registration procedure, a registration update procedure, a location update procedure, a handover procedure, etc. The handover procedure may include at least one of the following: N2-based handover, Xn-based handover, etc. It should be understood that this is only an exemplary description of the possible types of the first procedure. In actual processing, the procedure may include but is not limited to the several possible procedures listed above. This example does not impose exhaustive enumeration or limitations.

The terminal initiating the first procedure via the first 3GPP connection corresponding to the first access network device may refer to: the terminal sending a first message via the first 3GPP connection corresponding to the first access network device, where the first message is used to initiate the first procedure. The first message may be any uplink message capable of triggering or initiating the first procedure; for example, the first message may be any uplink NAS message, which is not limited in this embodiment.

The content carried by the first message may include at least one of the following: multi-3GPP connection related parameters, and parameters and/or information that the terminal is required to carry in the first message initiating the first procedure as specified by relevant protocols.

The first message is related to the specific type of the first procedure; the first message may at least include: parameters and/or information that the terminal is required to carry in the first message initiating the first procedure as specified by relevant protocols. For example, if the first procedure is a registration procedure, the first message may be a registration request message, and the content included in the registration request message may be the parameters and/or information that a registration request message is required to carry as specified by relevant protocols. As another example, if the first procedure is a handover procedure, the first message may be a handover request message, and the content included in the handover request message may be the parameters and/or information that a handover request message is required to carry as specified by relevant protocols, etc. All possible message types are not limited or exhaustively enumerated here.

The multi-3GPP connection related parameters may enable the core network side device to determine at least one of the following: the terminal supports establishing multiple 3GPP connections, and one or more other 3GPP connections that the terminal has established and currently maintains. The multi-3GPP connection related parameters may include identifiers or associated parameters of each of the one or more other 3GPP connections that the terminal has established and currently maintains, etc. This embodiment does not exhaustively enumerate or limit the specific content of the multi-3GPP connection related parameters.

It should be noted that the multi-3GPP connection related parameters are optional. If the first message does not carry the related parameters of the first 3GPP connection, after receiving the first message, the core network side device may still determine whether NCC and/or intermediate keys have been allocated for other 3GPP connections of the terminal based on identifiers carried in the first message as specified by existing protocols for the terminal (e.g., SUPI and/or globally unique temporary UE identity (GUTI)).

The processing by the core network side device after receiving the first message sent by the terminal via the first 3GPP connection corresponding to the first access network device may include: during the execution of the first procedure, the core network side device sending the NCC associated with the first 3GPP connection to the terminal, and sending the key generation parameters associated with the first 3GPP connection to the first access network device corresponding to the first 3GPP connection.

Correspondingly, the terminal receiving the NCC associated with the first 3GPP connection includes: during the execution of the first procedure, the terminal receiving the NCC associated with the first 3GPP connection sent by the core network side device. The processing for the first access network device receiving the key generation parameters associated with the first 3GPP connection of the terminal may include: the first access network device receiving the key generation parameters associated with the first 3GPP connection of the terminal sent by the core network side device.

Here, the transmission of the NCC associated with the first 3GPP connection occurs during the first procedure. That is, the NCC associated with the first 3GPP connection may be carried in any one or more messages or signaling sent by the core network side device to the terminal during the execution of the first procedure.

The transmission of the key generation parameters associated with the first 3GPP connection also occurs during the first procedure. That is, the key generation parameters associated with the first 3GPP connection may be carried in any one or more messages or signaling sent by the core network side device to the first access network device during the execution of the first procedure.

Optionally, while sending the NCC associated with the first 3GPP connection to the terminal, the core network side device may also send related parameters of the first 3GPP connection to the terminal. The related parameters of the first 3GPP connection may include identifiers or associated parameters of the first 3GPP connection, etc.

It should also be noted that, as explained in the previous embodiments, the first 3GPP connection is any 3GPP connection among the multiple 3GPP connections of the terminal that is not the first established and/or any 3GPP connection among the multiple 3GPP connections of the terminal for which AS keys are not first derived. Therefore, before the first 3GPP connection, the terminal may have performed one or more procedures similar to the first procedure to establish one or more other 3GPP connections and derive the AS keys associated with each of the other 3GPP connections.

Taking another 3GPP connection that is the first or initially established by the terminal as a second 3GPP connection as an example, the terminal will similarly perform the following processing: the terminal initiating a second procedure via the second 3GPP connection corresponding to a second access network device; receiving the NCC associated with the second 3GPP connection sent by the core network side device; and deriving the AS keys associated with the second 3GPP connection, where the AS keys associated with the second 3GPP connection are derived based on the security parameters associated with the second 3GPP connection, and the security parameters associated with the second 3GPP connection at least include the NCC associated with the second 3GPP connection.

The possible types of the second procedure are also similar to those of the first procedure. For example, it may be any one of the following types: a registration procedure, a registration update procedure, a location update procedure, a handover procedure, etc. It should be understood that the second procedure and the first procedure may be the same or different. For example, the second procedure may be a registration procedure (corresponding to the registration procedure of the second 3GPP connection), and the first procedure may also be a registration procedure (corresponding to the registration procedure of the first 3GPP connection). As another example, the second procedure may be a registration procedure (corresponding to the second 3GPP connection), and the first procedure may be a handover procedure, etc. All possible scenarios for the second procedure and the first procedure are not exhaustively enumerated here.

The terminal initiating the second procedure via the second 3GPP connection corresponding to the second access network device may refer to: the terminal sending a second message via the second 3GPP connection corresponding to the second access network device, where the second message is used to initiate the second procedure. The second message may be any uplink message capable of triggering or initiating the second procedure; for example, the second message may be any uplink NAS message, which is not limited in this embodiment. Optionally, a difference in the possible content carried by the second message compared to the previous embodiments is that the second message may also carry a first indication to enable the core network side device to determine that the terminal supports or requests to establish multiple 3GPP connections.

The possible content of the security parameters associated with the second 3GPP connection corresponds to the security parameters associated with each 3GPP connection in different scenarios described in the previous embodiments, and will not be repeated here. The manner in which the terminal derives the AS keys associated with the second 3GPP connection is also similar to the manner of deriving the associated AS keys for the first time in the previous embodiments and will not be elaborated.

The processing by the core network side device after receiving the second message sent by the terminal via the second 3GPP connection corresponding to the second access network device may include: during the execution of the second procedure, the core network side device sending the NCC associated with the second 3GPP connection to the terminal, and sending the key generation parameters associated with the second 3GPP connection to the second access network device corresponding to the second 3GPP connection.

Optionally, while sending the NCC associated with the second 3GPP connection to the terminal, the core network side device may also send related parameters of the second 3GPP connection to the terminal. The related parameters of the second 3GPP connection may include identifiers or associated parameters of the second 3GPP connection, etc.

Correspondingly, the processing by the second access network device may include: the second access network device receiving the key generation parameters associated with the second 3GPP connection of the terminal sent by the core network side device, and the second access network device deriving the AS keys associated with the second 3GPP connection.

The second access network device and the first access network device in the previous embodiments may be the same or different.

The key generation parameters associated with the second 3GPP connection may include at least one of the following: the NCC associated with the second 3GPP connection and the intermediate key associated with the second 3GPP connection. The manner in which the second access network device derives the AS keys associated with the second 3GPP connection is similar to the manner of deriving AS keys for the first time in the previous embodiments and will not be repeated.

In some possible implementations, the terminal may establish only one NAS connection (e.g., the second 3GPP connection in the previous embodiment). That is, the terminal may perform only one registration procedure to establish one NAS connection. Correspondingly, during the registration procedure, the terminal may obtain only one NCC (i.e., the terminal maintains one set of security context).

Furthermore, the terminal may establish multiple user plane connections, where different user plane connections among the multiple user plane connections may correspond to different access network devices. Since different access network devices corresponding to different user plane connections of the terminal need to use different AS keys, and the terminal may obtain only one NCC, in this case, the terminal may generate multiple AS keys based on the same NCC (i.e., the same set of security context), and different AS keys among the multiple AS keys correspond to different access network devices. Here, the processing for the terminal to generate multiple AS keys based on the same NCC includes: the terminal generating an intermediate key (which may be an initial key K_{gNB} or NH) based on the NCC and K_{AMF}; and based on the intermediate key and the radio parameters of each access network device (which may include first radio parameters and/or second radio parameters), calculating the AS keys corresponding to each access network device, with different AS keys corresponding to different access network devices.

For example, after establishing a NAS connection and obtaining one NCC, the terminal (e.g., UE) establishes user plane connections via two base stations (i.e., two access network devices), respectively. In this scenario, the UE uses the same NCC (i.e., the same set of security context) to generate two sets of AS keys, which correspond to the two base stations respectively. For example, AS key set-1 (which may include at least one of the following four keys: K_{RRCint-1}, K_{RRCenc-1}, K_{UPint-1}, K_{UPenc-1}) corresponds to base station 1, and AS key set-2 (which may include at least one of the following four keys: K_{RRCint-2}, K_{RRCenc-2}, K_{UPint-2}, K_{UPenc-2}) corresponds to base station 2.

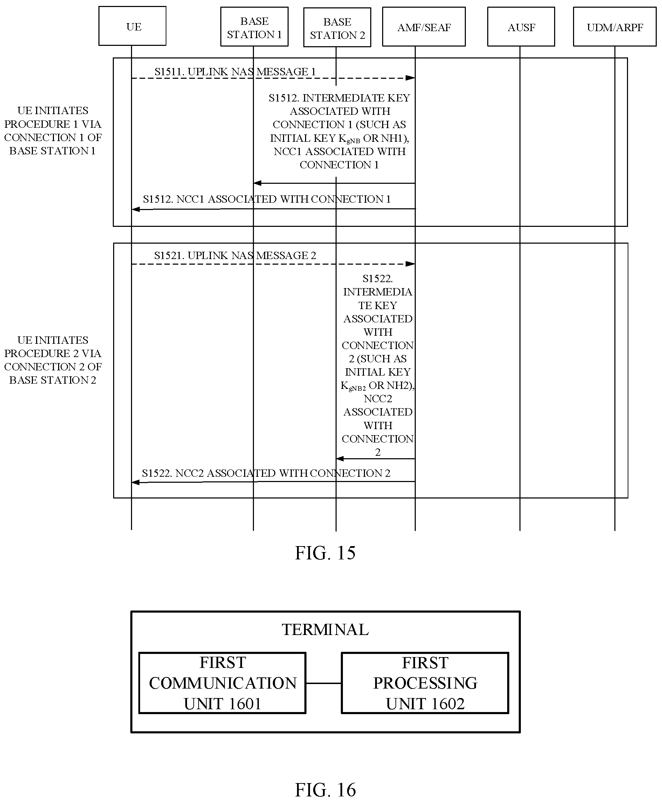

Finally, in combination with FIG. 15, and taking the case where the terminal is the UE, the core network side equipment includes the AMF/SEAF, and the first access network equipment corresponding to the first 3GPP connection is base station 2 as an example, an exemplary description of the processing flow of the key derivation method provided in this embodiment is given below.

S1511: the UE first initiates procedure 1 (such as the second procedure in the aforementioned embodiments) via connection 1 of base station 1 (for example, the 3GPP connection first established by the terminal in the aforementioned embodiments). Assume that procedure 1 is a first or initial registration procedure. In an uplink NAS message 1 (such as a registration request message) of procedure 1, a first indication (optional) can be carried. This first indication is used to inform the AMF/SEAF that the UE requests multiple 3GPP connections. Correspondingly, the AMF (or AMF/SEAF) can carry parameters related to connection 1 in a registration response message. These parameters related to connection 1 may include an association parameter or an identifier (index number) of connection 1. This parameter is used to indicate that multiple 3GPP connections established by this UE belong to the same UE, or indicate an index number of one of the 3GPP connections of the UE.

S1512: during the execution of procedure 1, the AMF (or AMF/SEAF) normally sends an intermediate key associated with connection 1 (such as the initial key K_{gNB} or NH1), and the NCC1 associated with 3GPP connection 1 to base station 1. This process is consistent with the mechanism described in existing standards. Furthermore, the AMF (or AMF/SEAF) sends the NCC1 associated with connection 1 to the UE.

Upon completion of this step, base station 1 derives the AS key associated with connection 1 based on the key generation parameters (the intermediate key associated with connection 1, such as the initial key K_{gNB} or NH1, and the NCC1 associated with 3GPP connection 1) sent by the AMF (or AMF/SEAF). The UE, on the other hand, since it possesses the root key, only needs the NCC1 associated with connection 1 to derive the AS key associated with connection 1.

It should be noted that base station 1 is the base station corresponding to connection 1. The following steps will involve base station 2 corresponding to connection 2. Both base station 1 and base station 2 are devices on the access network (AN) side. Base station 1 and base station 2 may be the same or different.

S1521: the UE first initiates procedure 2 (i.e., the first procedure in the aforementioned embodiments) via connection 2 of base station 2 (i.e., the first 3GPP connection in the aforementioned embodiments). In an uplink NAS message 2 of procedure 2, a first indication (optional) can be carried. This first indication is used to inform the AMF (or AMF/SEAF) that the UE requests multiple 3GPP connections. The uplink NAS message 2 may also carry parameters related to connection 1 (optional).

S1522: during the execution of procedure 2, the AMF (or AMF/SEAF) can determine, based on parameters reported by the UE, that intermediate keys and NCC1 associated with connection 1 have already been allocated for this UE. Therefore, it sends the intermediate key associated with connection 2 (such as K_{gNB2} or NH2) and NCC2 to base station 2; and sends the NCC2 associated with connection 2 to the UE.

Here, K_{gNB2} or NH2 may be the same as or different from the parameters (such as the initial key K_{gNB} or NH1) in procedure 1 of S1512 (i.e., the first registration procedure). Detailed possible values have been described in the aforementioned various possible embodiments and will not be repeated here. For NCC2, the AMF (or AMF/SEAF) may send an NCC2 that is the same as or different from the NCC1 in procedure 1 of S1512 (i.e., the first registration procedure). Detailed possible values have been described in the aforementioned various possible embodiments and will not be repeated here.

After S1522 is completed, base station 2 derives the AS key associated with connection 2 based on the key generation parameters (i.e., the intermediate key associated with connection 2, such as K_{gNB2} or NH2, and NCC2) obtained from the AMF (or AMF/SEAF). The UE, on the other hand, since it possesses the root key, only needs the NCC2 associated with connection 2 to derive the AS key associated with connection 2.

It should be noted that base station 1 and base station 2 may be the same base station or different base stations. Moreover, both connection 1 and connection 2 mentioned above are 3GPP connections of the terminal.

Procedure 1 and procedure 2 include, but are not limited to, existing NAS-related procedures, such as registration procedures, location update procedures, etc., and may also refer to handover procedures (including N2-based handover or Xn-based handover). The transmission of related key information may be part of procedure 1 and procedure 2, or it can be said to occur in procedure 1 and procedure 2.

In procedure 1 and procedure 2, in addition to sending key-related parameters to the UE and the base station corresponding to each connection, for example, sending the NCC associated with each connection to the UE, and sending the NCC and/or intermediate key associated with each connection to the base station corresponding to each connection, NAS layer and AS layer algorithm activation also needs to be performed, generally using a security mode command message.

In procedure 1 and procedure 2, the parameters related to the connection and the first indication carried in the uplink NAS message are optional. Even without these parameters, the AMF/SEAF may theoretically, through the UE's existing identifiers (such as SUPI, GUTI), find out whether key-related parameters have already been allocated for this UE. However, introducing these parameters has the benefit of reducing the maintenance burden on the network side and helps with backward compatibility, allowing the network side to know whether the UE supports establishing multiple 3GPP connections.

It should be understood that in the example of FIG. 15 above, only two 3GPP connections (connection 1 and connection 2) are used for illustrative purposes. In actual processing, the processing of S1521 and S1522 described above can also be performed for each non-first-established 3GPP connection. Ultimately, the UE and the base station(s) corresponding to each 3GPP connection can derive the AS key associated with each 3GPP connection, and the AS keys associated with different 3GPP connections are different. That is, the UE and the base station(s) corresponding to each 3GPP connection can derive and use keys based on the NCC (or NCC value) corresponding to each 3GPP connection. Simultaneously, the UE, the base stations corresponding to each 3GPP connection, and the AMF can store or maintain the association parameters and/or 3GPP connection identifiers in association with the NCC, so that the NCC value corresponding to each 3GPP connection can be known.

It can be seen that by adopting the above scheme, in scenarios where a terminal simultaneously maintains multiple 3GPP connections, the AS key associated with each 3GPP connection of the terminal can be derived, and the AS keys associated with different 3GPP connections are different. Thus, for the scenario where the UE accesses the 5G core network simultaneously through two 3GPP accesses, the derivation of AS keys for each 3GPP connection is achieved. This solves the problem in the related art where only the generation and simultaneous use of one set of 3GPP access keys and one set of non-3GPP access keys are supported while the derivation of AS keys for each 3GPP connection in multiple 3GPP connections is not supported, thereby ensuring the security of each 3GPP connection.

FIG. 16 is a schematic block diagram of a terminal according to an embodiment of the disclosure. The terminal includes a first communication unit 1601 and a first processing unit 1602.

The first communication unit 1601 is configured to receive a next hop chaining counter (NCC) associated with a first 3GPP connection, wherein the first 3GPP connection is one of multiple 3GPP connections of the terminal. The first processing unit 1602 is configured to derive an access stratum (AS) key associated with the first 3GPP connection, where the AS key associated with the first 3GPP connection is derived from a security parameter associated with the first 3GPP connection, where the security parameter associated with the first 3GPP connection includes the NCC associated with the first 3GPP connection, and where AS keys associated with different 3GPP connections among the plurality of 3GPP connections of the terminal are different.

The security parameter associated with the first 3GPP connection further includes at least one of: a first key associated with the first 3GPP connection, or an intermediate key associated with the first 3GPP connection.

First keys associated with different 3GPP connections among the plurality of 3GPP connections of the terminal are the same.

NCCs associated with different 3GPP connections among the plurality of 3GPP connections of the terminal are different, and intermediate keys associated with the different 3GPP connections are different.

The AS key associated with the first 3GPP connection is derived from an intermediate key associated with the first 3GPP connection, where the intermediate key associated with the first 3GPP connection is derived from a same first key associated with the plurality of 3GPP connections of the terminal, the NCC associated with the first 3GPP connection, and a first intermediate key, where the first intermediate key is an intermediate key generated by the terminal last time.

The intermediate key associated with the first 3GPP connection includes a next hop (NH) key associated with the first 3GPP connection; and the first intermediate key includes one of: an initial key, or a first NH key.

NCCs associated with different 3GPP connections among the plurality of 3GPP connections of the terminal are the same, and intermediate keys associated with the different 3GPP connections are different.

The AS key associated with the first 3GPP connection is derived from an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

The intermediate key associated with the first 3GPP connection includes an access network key associated with the first 3GPP connection; and the second intermediate key includes one of: an initial key, a second NH key, or a second access network key.

NCCs associated with different 3GPP connections among the plurality of 3GPP connections of the terminal are the same, and intermediate keys associated with the different 3GPP connections are the same.

The AS key associated with the first 3GPP connection is derived from an intermediate key associated with the first 3GPP connection and a second radio parameter of the first 3GPP connection, where the intermediate key associated with the first 3GPP connection is obtained based on the NCC associated with the first 3GPP connection, and second radio parameters of different 3GPP connections among the plurality of 3GPP connections of the terminal are different.

The AS key associated with the first 3GPP connection is derived from an access network key associated with the first 3GPP connection and a second radio parameter of the first 3GPP connection, and the access network key associated with the first 3GPP connection is derived from the intermediate key associated with the first 3GPP connection and a first radio parameter of the first 3GPP connection.

The first radio parameter of the first 3GPP connection is the same as the second radio parameter of the first 3GPP connection; or, the first radio parameter of the first 3GPP connection is at least partially different from the second radio parameter of the first 3GPP connection.

The first radio parameter of the first 3GPP connection includes at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, or a radio bearer identifier corresponding to the first 3GPP connection.

The second radio parameter of the first 3GPP connection includes at least one of: a cell ID corresponding to the first 3GPP connection, UL frequency information corresponding to the first 3GPP connection, DL frequency information corresponding to the first 3GPP connection, a TAC corresponding to the first 3GPP connection, or a radio bearer identifier corresponding to the first 3GPP connection.

The intermediate key associated with the first 3GPP connection includes one of: an initial key, or an NH key associated with the first 3GPP connection.

First keys associated with different 3GPP connections among the plurality of 3GPP connections of the terminal are different.

The AS key associated with the first 3GPP connection is derived from an intermediate key associated with the first 3GPP connection, and the intermediate key associated with the first 3GPP connection is derived from the NCC associated with the first 3GPP connection and the first key associated with the first 3GPP connection.

The intermediate key associated with the first 3GPP connection includes one of: an initial key associated with the first 3GPP connection, or an NH key associated with the first 3GPP connection.

The first key is K_{AMF}; the initial key is K_{gNB}; and the Access Network key is K_{NG-RAN}.

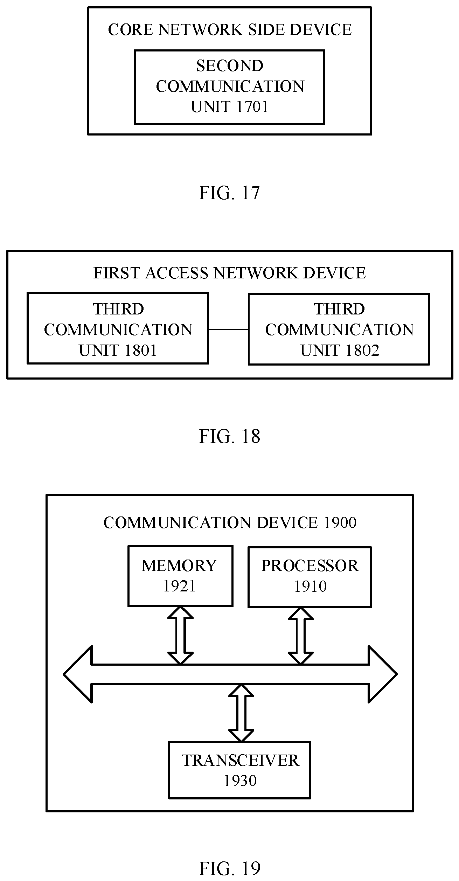

FIG. 17 is a schematic block diagram of a core network side device according to an embodiment of the disclosure. The core network side device includes a second communication unit 1701.

The second communication unit 1701 is configured to: send to a terminal, a next hop chaining counter (NCC) associated with a first 3GPP connection, where the first 3GPP connection is one of multiple 3GPP connections of the terminal, and the NCC associated with the first 3GPP connection is used for the terminal to derive an access stratum (AS) key associated with the first 3GPP connection, where AS keys associated with different 3GPP connections among the plurality of 3GPP connections of the terminal are different; and send to a first access network device corresponding to the first 3GPP connection, a key generation parameter associated with the first 3GPP connection, where the key generation parameter associated with the first 3GPP connection is used for the first access network device to derive the AS key associated with the first 3GPP connection.

The key generation parameter associated with the first 3GPP connection includes the NCC associated with the first 3GPP connection.

The key generation parameter associated with the first 3GPP connection includes an intermediate key associated with the first 3GPP connection.

The intermediate key associated with the first 3GPP connection is derived from a first key associated with the first 3GPP connection.

First keys associated with different 3GPP connections among the plurality of 3GPP connections of the terminal are the same.

NCCs associated with different 3GPP connections among the plurality of 3GPP connections of the terminal are different, and intermediate keys associated with different 3GPP connections are different.

The intermediate key associated with the first 3GPP connection is derived from a same first key associated with the plurality of 3GPP connections of the terminal and a first intermediate key, where the first intermediate key is an intermediate key corresponding to the terminal generated last time.

NCCs associated with different 3GPP connections among the plurality of 3GPP connections of the terminal are the same.

NCCs associated with different 3GPP connections among the plurality of 3GPP connections of the terminal are the same, and intermediate keys associated with different 3GPP connections are the same.

The intermediate key associated with the first 3GPP connection includes one of: an initial key, a next hop (NH) key associated with the first 3GPP connection.

First keys associated with different 3GPP connections among the plurality of 3GPP connections of the terminal are different.

The intermediate key associated with the first 3GPP connection includes one of: an initial key associated with the first 3GPP connection, an NH key associated with the first 3GPP connection.

The first key is K_{AMF}; the initial key is K_{gNB}.

FIG. 18 is a schematic block diagram of a first access network device according to an embodiment of the disclosure. The first access network device includes a third communication unit 1801 and a third processing unit 1802.

The third communication unit is configured to receive a key generation parameter associated with a first 3GPP connection of a terminal, where the first 3GPP connection is one of multiple 3GPP connections of the terminal.

The third processing unit 1802 is configured to derive an access stratum (AS) key associated with the first 3GPP connection, where the AS key associated with the first 3GPP connection is derived from the key generation parameter associated with the first 3GPP connection, and AS keys associated with different 3GPP connections among the plurality of 3GPP connections of the terminal are different.

The key generation parameter associated with the first 3GPP connection includes a next hop chaining counter (NCC) associated with the first 3GPP connection.

The key generation parameter associated with the first 3GPP connection further includes: an intermediate key associated with the first 3GPP connection.

NCCs associated with different 3GPP connections among the plurality of 3GPP connections of the terminal are different, and intermediate keys associated with different 3GPP connections are different.

NCCs associated with different 3GPP connections among the plurality of 3GPP connections of the terminal are the same, and intermediate keys associated with different 3GPP connections are different.

The AS key associated with the first 3GPP connection is generated based on an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

The third communication unit is configured to obtain the second intermediate key.

The intermediate key associated with the first 3GPP connection includes an access network key associated with the first 3GPP connection; the second intermediate key includes one of: an initial key, a second NH key, a second access network key.

NCCs associated with different 3GPP connections among the plurality of 3GPP connections of the terminal are the same, and intermediate keys associated with different 3GPP connections are the same.

The AS key associated with the first 3GPP connection is derived from the intermediate key associated with the first 3GPP connection and a second radio parameter of the first 3GPP connection, where second radio parameters of different 3GPP connections among the plurality of 3GPP connections of the terminal are different.

The AS key associated with the first 3GPP connection is derived from an access network key associated with the first 3GPP connection and the second radio parameter of the first 3GPP connection, and the access network key associated with the first 3GPP connection is derived from the intermediate key associated with the first 3GPP connection and a first radio parameter of the first 3GPP connection.

The first radio parameter of the first 3GPP connection is the same as the second radio parameter of the first 3GPP connection; or, the first radio parameter of the first 3GPP connection is at least partially different from the second radio parameter of the first 3GPP connection.

The first radio parameter of the first 3GPP connection includes at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, a radio bearer identifier corresponding to the first 3GPP connection.

The second radio parameter of the first 3GPP connection includes at least one of: a cell identifier corresponding to the first 3GPP connection, UL frequency information corresponding to the first 3GPP connection, DL frequency information corresponding to the first 3GPP connection, a TAC corresponding to the first 3GPP connection, a radio bearer identifier corresponding to the first 3GPP connection.

The intermediate key associated with the first 3GPP connection includes one of: an initial key, a next hop (NH) key associated with the first 3GPP connection.

The intermediate key associated with the first 3GPP connection includes one of: an initial key associated with the first 3GPP connection, a NH key associated with the first 3GPP connection.

The AS key associated with the first 3GPP connection is derived from the intermediate key associated with the first 3GPP connection.

The initial key is K_{gNB}; the access network key is K_{NG-RAN}.

The device of embodiments of the disclosure can implement the corresponding functions of each device in the aforementioned method. The corresponding processes, functions, implementations, and beneficial effects of the various modules (sub-modules, units, or components, etc.) in the terminal device, or the core network side device, or the first access network device can be referred to in the corresponding descriptions in the aforementioned method embodiments, which will not be repeated here. It should be noted that the functions described for the various modules (sub-modules, units, or components, etc.) in the terminal device, or the core network side device, or the first access network device of the application embodiment may be implemented by different modules (sub-modules, units, or components, etc.) or by the same module (sub-module, unit, or component, etc.).

FIG. 19 is a schematic structural diagram of a communication device 1900 according to an embodiment of the disclosure. The communication device 1900 includes a processor 1910. The processor 1910 can invoke and run a computer program from a memory to enable the communication device 1900 to implement the method in the embodiments of the disclosure. In a possible implementation, the communication device 1900 may further include a memory 1920. The processor 1910 can invoke and run a computer program from the memory 1920 to enable the communication device 1900 to implement the method in the embodiments of the disclosure. The memory 1920 may be a separate device independent of the processor 1910 or may be integrated into the processor 1910. In a possible implementation, the communication device 1900 may further include a transceiver 1930. The processor 1910 can control the transceiver 1930 to communicate with other devices, specifically, to send information or data to other devices or receive information or data sent by other devices. The transceiver 1930 may include a transmitter and a receiver. The transceiver 1930 may further include one or more antennas.

In a possible implementation, the communication device 1900 may be the terminal device, the core network side device, or the first access network device of the embodiments of the disclosure, and the communication device 1900 may implement the corresponding processes performed by the terminal device, the core network side device, or the first access network device in the various methods of the embodiments of the disclosure. For brevity, details are not repeated here.

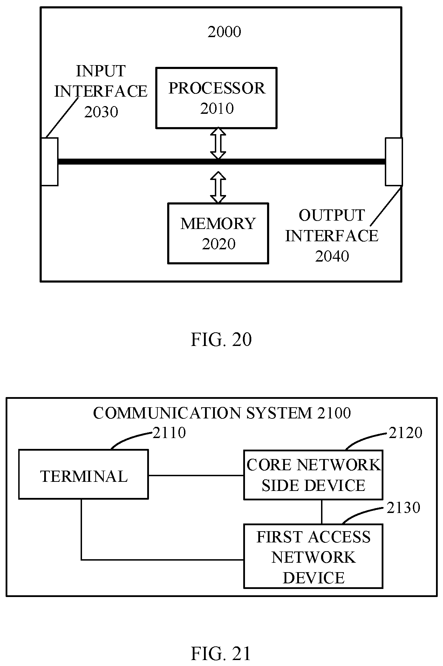

FIG. 20 is a schematic structural diagram of a chip 2000 according to an embodiment of the disclosure. The chip 2000 includes a processor 2010. The processor 2010 can invoke and run a computer program from a memory to implement the method in the embodiments of the disclosure. In a possible implementation, the chip 2000 may further include a memory 2020. The processor 2010 can invoke and run a computer program from the memory 2020 to implement the method performed by the first device or the target second device in the embodiments of the disclosure. The memory 2020 may be a separate device independent of the processor 2010 or may be integrated into the processor 2010. In a possible implementation, the chip 2000 may further include an input interface 2030. The processor 2010 can control the input interface 2030 to communicate with other devices or chips, specifically, to obtain information or data sent by other devices or chips. In a possible implementation, the chip 2000 may further include an output interface 2040. The processor 2010 can control the output interface 2040 to communicate with other devices or chips, specifically, to output information or data to other devices or chips.

In a possible implementation, the chip may be applied to the terminal device, the core network side device, or the first access network device in the embodiments of the disclosure, and the chip may implement the corresponding processes performed by the terminal device, the core network side device, or the first access network device in the various methods of the embodiments of the disclosure. For brevity, details are not repeated here. It should be understood that the chip mentioned in the embodiments of the disclosure may also be referred to as a system-on-chip, a system chip, a chip system, or a system-on-a-chip, etc. The processor mentioned above may be a general-purpose processor, a digital signal processor (DSP), a field-programmable gate array (FPGA), an application-specific integrated circuit (ASIC), or other programmable logic devices, transistor logic devices, discrete hardware components, etc. The general-purpose processor mentioned above may be a microprocessor or any conventional processor, etc. The memory mentioned above may be a volatile memory or a non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or flash memory. The volatile memory may be a random access memory (RAM). It should be understood that the above description of the memory is exemplary but not restrictive. For example, the memory in the embodiments of the disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), or a direct Rambus RAM (DR RAM), etc. That is, the memory in the embodiments of the disclosure is intended to include, but is not limited to, these and any other suitable types of memory.

FIG. 21 is a schematic block diagram of a communication system 2100 according to an embodiment of the disclosure. The communication system 2100 includes a terminal 2110, a core network side device 2120, and a first access network device 2130. The terminal 2110 may be used to implement the corresponding functions performed by the terminal in the above method. The core network side device 2120 may be used to implement the corresponding functions performed by the core network side device in the above method. For brevity, details are not repeated here. The first access network device 2130 may be used to implement the corresponding functions performed by the first access network device in the above method. For brevity, details are not repeated here.

In the above embodiments, implementation may be achieved entirely or partially through software, hardware, firmware, or any combination thereof. When software is used for implementation, it may be implemented entirely or partially in the form of a computer program product. The computer program product includes one or more computer instructions. When the computer program instructions are loaded and executed on a computer, the processes or functions according to the embodiments of the disclosure are generated entirely or partially. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from one website, computer, server, or data center to another website, computer, server, or data center via wired means (such as coaxial cable, optical fiber, or Digital Subscriber Line (DSL)) or wireless means (such as infrared, wireless, microwave, etc.). The computer-readable storage medium may be any available medium that can be accessed by a computer or a data storage device, such as a server or data center, that integrates one or more available media. The available medium may be a magnetic medium (such as a floppy disk, hard disk, or magnetic tape), an optical medium (such as a DVD), or a semiconductor medium (such as a Solid State Disk (SSD)), etc.

It should be understood that, in the various embodiments of the disclosure, the order of the above processes does not imply the sequence of execution, and the execution order of each process should be determined by its function and internal logic, and should not impose any limitation on the implementation process of the embodiments of the disclosure. Those skilled in the art may clearly understand that, for the convenience and brevity of description, the specific working processes of the systems, devices, and units described above may refer to the corresponding processes in the aforementioned method embodiments and will not be repeated here. The above descriptions are merely specific implementations of the disclosure. However, the scope of protection of the disclosure is not limited thereto. Any person skilled in the art can easily conceive of changes or substitutions within the technical scope disclosed in the disclosure, which shall fall within the scope of protection of the disclosure. Therefore, the scope of protection of the disclosure shall be subject to the scope of protection of the claims.

## Claims

1. A key derivation method, comprising:
receiving, by a terminal, a next hop chaining counter (NCC) associated with a first third generation partnership project (3GPP) connection, wherein the first 3GPP connection is one of a plurality of 3GPP connections of the terminal; and
deriving, by the terminal, an access stratum (AS) key associated with the first 3GPP connection, wherein the AS key associated with the first 3GPP connection is derived from a security parameter associated with the first 3GPP connection, wherein the security parameter associated with the first 3GPP connection comprises the NCC associated with the first 3GPP connection, and wherein AS keys associated with different 3GPP connections among the plurality of 3GPP connections of the terminal are different.

2. The method according to claim 1, wherein the security parameter associated with the first 3GPP connection further comprises at least one of: a first key associated with the first 3GPP connection, or an intermediate key associated with the first 3GPP connection.

3. The method according to claim 2, wherein first keys associated with different 3GPP connections among the plurality of 3GPP connections of the terminal are the same.

4. The method according to claim 3, wherein NCCs associated with different 3GPP connections among the plurality of 3GPP connections of the terminal are different, and intermediate keys associated with the different 3GPP connections are different.

5. The method according to claim 4, wherein the AS key associated with the first 3GPP connection is derived from an intermediate key associated with the first 3GPP connection, wherein the intermediate key associated with the first 3GPP connection is derived from a same first key associated with the plurality of 3GPP connections of the terminal, the NCC associated with the first 3GPP connection, and a first intermediate key, wherein the first intermediate key is an intermediate key generated by the terminal last time.

6. The method according to claim 5, wherein the intermediate key associated with the first 3GPP connection comprises a next hop (NH) key associated with the first 3GPP connection; and the first intermediate key comprises one of: an initial key, or a first NH key.

7. The method according to claim 3, wherein NCCs associated with different 3GPP connections among the plurality of 3GPP connections of the terminal are the same, and intermediate keys associated with the different 3GPP connections are different.

8. The method according to claim 7, wherein the AS key associated with the first 3GPP connection is derived from an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

9. The method according to claim 8, wherein the intermediate key associated with the first 3GPP connection comprises an access network key associated with the first 3GPP connection; and the second intermediate key comprises one of: an initial key, a second NH key, or a second access network key.

10. The method according to claim 3, wherein NCCs associated with different 3GPP connections among the plurality of 3GPP connections of the terminal are the same, and intermediate keys associated with the different 3GPP connections are the same.

11. The method according to claim 10, wherein the AS key associated with the first 3GPP connection is derived from an intermediate key associated with the first 3GPP connection and a second radio parameter of the first 3GPP connection, wherein the intermediate key associated with the first 3GPP connection is obtained based on the NCC associated with the first 3GPP connection, and second radio parameters of different 3GPP connections among the plurality of 3GPP connections of the terminal are different.

12. The method according to claim 11, wherein the AS key associated with the first 3GPP connection is derived from an access network key associated with the first 3GPP connection and a second radio parameter of the first 3GPP connection, and the access network key associated with the first 3GPP connection is derived from the intermediate key associated with the first 3GPP connection and a first radio parameter of the first 3GPP connection.

13. The method according to claim 12, wherein the first radio parameter of the first 3GPP connection is the same as the second radio parameter of the first 3GPP connection; or, the first radio parameter of the first 3GPP connection is at least partially different from the second radio parameter of the first 3GPP connection.

14. The method according to any one of claims 8, 9, 12, or 13, wherein the first radio parameter of the first 3GPP connection comprises at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, or a radio bearer identifier corresponding to the first 3GPP connection.

15. The method according to any one of claims 11 to 13, wherein the second radio parameter of the first 3GPP connection comprises at least one of: a cell ID corresponding to the first 3GPP connection, UL frequency information corresponding to the first 3GPP connection, DL frequency information corresponding to the first 3GPP connection, a TAC corresponding to the first 3GPP connection, or a radio bearer identifier corresponding to the first 3GPP connection.

16. The method according to any one of claims 11 to 13, wherein the intermediate key associated with the first 3GPP connection comprises one of: an initial key, or an NH key associated with the first 3GPP connection.

17. The method according to claim 2, wherein first keys associated with different 3GPP connections among the plurality of 3GPP connections of the terminal are different.

18. The method according to claim 17, wherein the AS key associated with the first 3GPP connection is derived from an intermediate key associated with the first 3GPP connection, and the intermediate key associated with the first 3GPP connection is derived from the NCC associated with the first 3GPP connection and the first key associated with the first 3GPP connection.

19. The method according to claim 18, wherein the intermediate key associated with the first 3GPP connection comprises one of: an initial key associated with the first 3GPP connection, or an NH key associated with the first 3GPP connection.

20. The method according to any one of claims 6, 9, 16, or 19, wherein the first key is K_{AMF}; the initial key is K_{gNB}; and the Access Network key is K_{NG-RAN}.

21. A key derivation method, comprising:
sending, by a core network side device to a terminal, a next hop chaining counter (NCC) associated with a first third generation partnership project (3GPP) connection, wherein the first 3GPP connection is one of a plurality of 3GPP connections of the terminal, and the NCC associated with the first 3GPP connection is used for the terminal to derive an access stratum (AS) key associated with the first 3GPP connection, wherein AS keys associated with different 3GPP connections among the plurality of 3GPP connections of the terminal are different; and
sending, by the core network side device to a first access network device corresponding to the first 3GPP connection, a key generation parameter associated with the first 3GPP connection, wherein the key generation parameter associated with the first 3GPP connection is used for the first access network device to derive the AS key associated with the first 3GPP connection.

22. The method according to claim 21, wherein the key generation parameter associated with the first 3GPP connection comprises the NCC associated with the first 3GPP connection.

23. The method according to claim 22, wherein the key generation parameter associated with the first 3GPP connection comprises an intermediate key associated with the first 3GPP connection.

24. The method according to claim 23, wherein the intermediate key associated with the first 3GPP connection is derived from a first key associated with the first 3GPP connection.

25. The method according to claim 24, wherein first keys associated with different 3GPP connections among the plurality of 3GPP connections of the terminal are the same.

26. The method according to claim 25, wherein NCCs associated with different 3GPP connections among the plurality of 3GPP connections of the terminal are different, and intermediate keys associated with different 3GPP connections are different.

27. The method according to claim 26, wherein the intermediate key associated with the first 3GPP connection is derived from a same first key associated with the plurality of 3GPP connections of the terminal and a first intermediate key, wherein the first intermediate key is an intermediate key corresponding to the terminal generated last time.

28. The method according to claim 22, wherein NCCs associated with different 3GPP connections among the plurality of 3GPP connections of the terminal are the same.

29. The method according to claim 24, wherein NCCs associated with different 3GPP connections among the plurality of 3GPP connections of the terminal are the same, and intermediate keys associated with different 3GPP connections are the same.

30. The method according to any one of claims 23-27 and 29, wherein the intermediate key associated with the first 3GPP connection comprises one of: an initial key, a next hop (NH) key associated with the first 3GPP connection.

31. The method according to claim 24, wherein first keys associated with different 3GPP connections among the plurality of 3GPP connections of the terminal are different.

32. The method according to claim 31, wherein the intermediate key associated with the first 3GPP connection comprises one of: an initial key associated with the first 3GPP connection, an NH key associated with the first 3GPP connection.

33. The method according to claim 30 or 32, wherein the first key is K_{AMF}; the initial key is K_{gNB}.

34. A key derivation method, comprising:
receiving, by a first access network device, a key generation parameter associated with a first third generation partnership project (3GPP) connection of a terminal, wherein the first 3GPP connection is one of a plurality of 3GPP connections of the terminal; and
deriving, by the first access network device, an access stratum (AS) key associated with the first 3GPP connection, wherein the AS key associated with the first 3GPP connection is derived from the key generation parameter associated with the first 3GPP connection, and AS keys associated with different 3GPP connections among the plurality of 3GPP connections of the terminal are different.

35. The method according to claim 34, wherein the key generation parameter associated with the first 3GPP connection comprises a next hop chaining counter (NCC) associated with the first 3GPP connection.

36. The method according to claim 35, wherein the key generation parameter associated with the first 3GPP connection further comprises: an intermediate key associated with the first 3GPP connection.

37. The method according to claim 36, wherein NCCs associated with different 3GPP connections among the plurality of 3GPP connections of the terminal are different, and intermediate keys associated with different 3GPP connections are different.

38. The method according to claim 35, wherein NCCs associated with different 3GPP connections among the plurality of 3GPP connections of the terminal are the same, and intermediate keys associated with different 3GPP connections are different.

39. The method according to claim 38, wherein the AS key associated with the first 3GPP connection is generated based on an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

40. The method according to claim 39, wherein the method further comprises:
obtaining, by the first access network device, the second intermediate key.

41. The method according to claim 39 or 40, wherein the intermediate key associated with the first 3GPP connection comprises an access network key associated with the first 3GPP connection; the second intermediate key comprises one of: an initial key, a second NH key, a second access network key.

42. The method according to claim 36, wherein NCCs associated with different 3GPP connections among the plurality of 3GPP connections of the terminal are the same, and intermediate keys associated with different 3GPP connections are the same.

43. The method according to claim 42, wherein the AS key associated with the first 3GPP connection is derived from the intermediate key associated with the first 3GPP connection and a second radio parameter of the first 3GPP connection, wherein second radio parameters of different 3GPP connections among the plurality of 3GPP connections of the terminal are different.

44. The method according to claim 43, wherein the AS key associated with the first 3GPP connection is derived from an access network key associated with the first 3GPP connection and the second radio parameter of the first 3GPP connection, and the access network key associated with the first 3GPP connection is derived from the intermediate key associated with the first 3GPP connection and a first radio parameter of the first 3GPP connection.

45. The method according to claim 44, wherein the first radio parameter of the first 3GPP connection is the same as the second radio parameter of the first 3GPP connection; or, the first radio parameter of the first 3GPP connection is at least partially different from the second radio parameter of the first 3GPP connection.

46. The method according to any one of claims 39-41, 44, and 45, wherein the first radio parameter of the first 3GPP connection comprises at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, a radio bearer identifier corresponding to the first 3GPP connection.

47. The method according to any one of claims 43-45, wherein the second radio parameter of the first 3GPP connection comprises at least one of: a cell identifier corresponding to the first 3GPP connection, UL frequency information corresponding to the first 3GPP connection, DL frequency information corresponding to the first 3GPP connection, a TAC corresponding to the first 3GPP connection, a radio bearer identifier corresponding to the first 3GPP connection.

48. The method according to any one of claims 37, 42-45, wherein the intermediate key associated with the first 3GPP connection comprises one of: an initial key, a next hop (NH) key associated with the first 3GPP connection.

49. The method according to claim 37, wherein the intermediate key associated with the first 3GPP connection comprises one of: an initial key associated with the first 3GPP connection, a NH key associated with the first 3GPP connection.

50. The method according to claim 36, 37, or 49, wherein the AS key associated with the first 3GPP connection is derived from the intermediate key associated with the first 3GPP connection.

51. The method according to claim 41, 48, or 49, wherein the initial key is K_{gNB}; the access network key is K_{NG-RAN}.

52. A terminal, comprising:
a first communication unit, configured to receive a next hop chaining counter (NCC) associated with a first third generation partnership project (3GPP) connection, wherein the first 3GPP connection is one of a plurality of 3GPP connections of the terminal; and
a first processing unit, configured to derive an access stratum (AS) key associated with the first 3GPP connection, wherein the AS key associated with the first 3GPP connection is derived from a security parameter associated with the first 3GPP connection, wherein the security parameter associated with the first 3GPP connection comprises the NCC associated with the first 3GPP connection, and wherein AS keys associated with different 3GPP connections among the plurality of 3GPP connections of the terminal are different.

53. The terminal according to claim 52, wherein the security parameter associated with the first 3GPP connection further comprises at least one of: a first key associated with the first 3GPP connection, or an intermediate key associated with the first 3GPP connection.

54. The terminal according to claim 53, wherein first keys associated with different 3GPP connections among the plurality of 3GPP connections of the terminal are the same.

55. The terminal according to claim 54, wherein NCCs associated with different 3GPP connections among the plurality of 3GPP connections of the terminal are different, and intermediate keys associated with the different 3GPP connections are different.

56. The terminal according to claim 55, wherein the AS key associated with the first 3GPP connection is derived from an intermediate key associated with the first 3GPP connection, wherein the intermediate key associated with the first 3GPP connection is derived from a same first key associated with the plurality of 3GPP connections of the terminal, the NCC associated with the first 3GPP connection, and a first intermediate key, wherein the first intermediate key is an intermediate key generated by the terminal last time.

57. The terminal according to claim 56, wherein the intermediate key associated with the first 3GPP connection comprises a next hop (NH) key associated with the first 3GPP connection; and the first intermediate key comprises one of: an initial key, or a first NH key.

58. The terminal according to claim 54, wherein NCCs associated with different 3GPP connections among the plurality of 3GPP connections of the terminal are the same, and intermediate keys associated with the different 3GPP connections are different.

59. The terminal according to claim 58, wherein the AS key associated with the first 3GPP connection is derived from an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

60. The terminal according to claim 59, wherein the intermediate key associated with the first 3GPP connection comprises an access network key associated with the first 3GPP connection; and the second intermediate key comprises one of: an initial key, a second NH key, or a second access network key.

61. The terminal according to claim 54, wherein NCCs associated with different 3GPP connections among the plurality of 3GPP connections of the terminal are the same, and intermediate keys associated with the different 3GPP connections are the same.

62. The terminal according to claim 61, wherein the AS key associated with the first 3GPP connection is derived from an intermediate key associated with the first 3GPP connection and a second radio parameter of the first 3GPP connection, wherein the intermediate key associated with the first 3GPP connection is obtained based on the NCC associated with the first 3GPP connection, and second radio parameters of different 3GPP connections among the plurality of 3GPP connections of the terminal are different.

63. The terminal according to claim 62, wherein the AS key associated with the first 3GPP connection is derived from an access network key associated with the first 3GPP connection and a second radio parameter of the first 3GPP connection, and the access network key associated with the first 3GPP connection is derived from the intermediate key associated with the first 3GPP connection and a first radio parameter of the first 3GPP connection.

64. The terminal according to claim 63, wherein the first radio parameter of the first 3GPP connection is the same as the second radio parameter of the first 3GPP connection; or, the first radio parameter of the first 3GPP connection is at least partially different from the second radio parameter of the first 3GPP connection.

65. The terminal according to any one of claims 59, 60, 63, or 64, wherein the first radio parameter of the first 3GPP connection comprises at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, or a radio bearer identifier corresponding to the first 3GPP connection.

66. The terminal according to any one of claims 62 to 64, wherein the second radio parameter of the first 3GPP connection comprises at least one of: a cell ID corresponding to the first 3GPP connection, UL frequency information corresponding to the first 3GPP connection, DL frequency information corresponding to the first 3GPP connection, a TAC corresponding to the first 3GPP connection, or a radio bearer identifier corresponding to the first 3GPP connection.

67. The terminal according to any one of claims 62 to 64, wherein the intermediate key associated with the first 3GPP connection comprises one of: an initial key, or an NH key associated with the first 3GPP connection.

68. The terminal according to claim 53, wherein first keys associated with different 3GPP connections among the plurality of 3GPP connections of the terminal are different.

69. The terminal according to claim 68, wherein the AS key associated with the first 3GPP connection is derived from an intermediate key associated with the first 3GPP connection, and the intermediate key associated with the first 3GPP connection is derived from the NCC associated with the first 3GPP connection and the first key associated with the first 3GPP connection.

70. The terminal according to claim 69, wherein the intermediate key associated with the first 3GPP connection comprises one of: an initial key associated with the first 3GPP connection, or an NH key associated with the first 3GPP connection.

71. The terminal according to any one of claims 57, 60, 67, or 70, wherein the first key is K_{AMF}; the initial key is K_{gNB}; and the Access Network key is K_{NG-RAN}.

72. A core network side device, comprising:
a second communication unit, configured to:
send to a terminal, a next hop chaining counter (NCC) associated with a first third generation partnership project (3GPP) connection, wherein the first 3GPP connection is one of a plurality of 3GPP connections of the terminal, and the NCC associated with the first 3GPP connection is used for the terminal to derive an access stratum (AS) key associated with the first 3GPP connection, wherein AS keys associated with different 3GPP connections among the plurality of 3GPP connections of the terminal are different; and
send to a first access network device corresponding to the first 3GPP connection, a key generation parameter associated with the first 3GPP connection, wherein the key generation parameter associated with the first 3GPP connection is used for the first access network device to derive the AS key associated with the first 3GPP connection.

73. The core network side device according to claim 72, wherein the key generation parameter associated with the first 3GPP connection comprises the NCC associated with the first 3GPP connection.

74. The core network side device according to claim 73, wherein the key generation parameter associated with the first 3GPP connection comprises an intermediate key associated with the first 3GPP connection.

75. The core network side device according to claim 74, wherein the intermediate key associated with the first 3GPP connection is derived from a first key associated with the first 3GPP connection.

76. The core network side device according to claim 75, wherein first keys associated with different 3GPP connections among the plurality of 3GPP connections of the terminal are the same.

77. The core network side device according to claim 76, wherein NCCs associated with different 3GPP connections among the plurality of 3GPP connections of the terminal are different, and intermediate keys associated with different 3GPP connections are different.

78. The core network side device according to claim 77, wherein the intermediate key associated with the first 3GPP connection is derived from a same first key associated with the plurality of 3GPP connections of the terminal and a first intermediate key, wherein the first intermediate key is an intermediate key corresponding to the terminal generated last time.

79. The core network side device according to claim 78, wherein NCCs associated with different 3GPP connections among the plurality of 3GPP connections of the terminal are the same.

80. The core network side device according to claim 75, wherein NCCs associated with different 3GPP connections among the plurality of 3GPP connections of the terminal are the same, and intermediate keys associated with different 3GPP connections are the same.

81. The core network side device according to any one of claims 74-78 and 80, wherein the intermediate key associated with the first 3GPP connection comprises one of: an initial key, a next hop (NH) key associated with the first 3GPP connection.

82. The core network side device according to claim 75, wherein first keys associated with different 3GPP connections among the plurality of 3GPP connections of the terminal are different.

83. The core network side device according to claim 82, wherein the intermediate key associated with the first 3GPP connection comprises one of: an initial key associated with the first 3GPP connection, an NH key associated with the first 3GPP connection.

84. The core network side device according to claim 81 or 83, wherein the first key is K_{AMF}; the initial key is K_{gNB}.

85. A first access network device, comprising:
a third communication unit, configured to receive a key generation parameter associated with a first third generation partnership project (3GPP) connection of a terminal, wherein the first 3GPP connection is one of a plurality of 3GPP connections of the terminal; and
a third processing unit, configured to derive an access stratum (AS) key associated with the first 3GPP connection, wherein the AS key associated with the first 3GPP connection is derived from the key generation parameter associated with the first 3GPP connection, and AS keys associated with different 3GPP connections among the plurality of 3GPP connections of the terminal are different.

86. The first access network device according to claim 85, wherein the key generation parameter associated with the first 3GPP connection comprises a next hop chaining counter (NCC) associated with the first 3GPP connection.

87. The first access network device according to claim 86, wherein the key generation parameter associated with the first 3GPP connection further comprises: an intermediate key associated with the first 3GPP connection.

88. The first access network device according to claim 87, wherein NCCs associated with different 3GPP connections among the plurality of 3GPP connections of the terminal are different, and intermediate keys associated with different 3GPP connections are different.

89. The first access network device according to claim 86, wherein NCCs associated with different 3GPP connections among the plurality of 3GPP connections of the terminal are the same, and intermediate keys associated with different 3GPP connections are different.

90. The first access network device according to claim 89, wherein the AS key associated with the first 3GPP connection is generated based on an intermediate key associated with the first 3GPP connection, the intermediate key associated with the first 3GPP connection is generated based on a second intermediate key and a first radio parameter of the first 3GPP connection, and an NCC corresponding to the second intermediate key is the same as the NCC associated with the first 3GPP connection.

91. The first access network device according to claim 90, wherein the third communication unit is configured to obtain the second intermediate key.

92. The first access network device according to claim 90 or 91, wherein the intermediate key associated with the first 3GPP connection comprises an access network key associated with the first 3GPP connection; the second intermediate key comprises one of: an initial key, a second NH key, a second access network key.

93. The first access network device according to claim 87, wherein NCCs associated with different 3GPP connections among the plurality of 3GPP connections of the terminal are the same, and intermediate keys associated with different 3GPP connections are the same.

94. The first access network device according to claim 93, wherein the AS key associated with the first 3GPP connection is derived from the intermediate key associated with the first 3GPP connection and a second radio parameter of the first 3GPP connection, wherein second radio parameters of different 3GPP connections among the plurality of 3GPP connections of the terminal are different.

95. The first access network device according to claim 94, wherein the AS key associated with the first 3GPP connection is derived from an access network key associated with the first 3GPP connection and the second radio parameter of the first 3GPP connection, and the access network key associated with the first 3GPP connection is derived from the intermediate key associated with the first 3GPP connection and a first radio parameter of the first 3GPP connection.

96. The first access network device according to claim 95, wherein the first radio parameter of the first 3GPP connection is the same as the second radio parameter of the first 3GPP connection; or, the first radio parameter of the first 3GPP connection is at least partially different from the second radio parameter of the first 3GPP connection.

97. The first access network device according to any one of claims 90-92, 95, and 96, wherein the first radio parameter of the first 3GPP connection comprises at least one of: a cell identifier corresponding to the first 3GPP connection, uplink (UL) frequency information corresponding to the first 3GPP connection, downlink (DL) frequency information corresponding to the first 3GPP connection, a tracking area code (TAC) corresponding to the first 3GPP connection, a radio bearer identifier corresponding to the first 3GPP connection.

98. The first access network device according to any one of claims 94-96, wherein the second radio parameter of the first 3GPP connection comprises at least one of: a cell identifier corresponding to the first 3GPP connection, UL frequency information corresponding to the first 3GPP connection, DL frequency information corresponding to the first 3GPP connection, a TAC corresponding to the first 3GPP connection, a radio bearer identifier corresponding to the first 3GPP connection.

99. The first access network device according to any one of claims 88, 93-96, wherein the intermediate key associated with the first 3GPP connection comprises one of: an initial key, a next hop (NH) key associated with the first 3GPP connection.

100. The first access network device according to claim 88, wherein the intermediate key associated with the first 3GPP connection comprises one of: an initial key associated with the first 3GPP connection, a NH key associated with the first 3GPP connection.

101. The first access network device according to claim 87, 88, or 100, wherein the AS key associated with the first 3GPP connection is derived from the intermediate key associated with the first 3GPP connection.

102. The first access network device according to claim 92, 99, or 100, wherein the initial key is K_{gNB}; the access network key is K_{NG-RAN}.

103. A terminal, comprising: a transceiver, a processor, and a memory, wherein the memory is configured to store a computer program, the transceiver is configured to communicate with other devices, and the processor is configured to invoke and run the computer program stored in the memory to cause the terminal to perform the method according to any one of claims 1 to 20.

104. A core network side device, comprising: a transceiver, a processor, and a memory, wherein the memory is configured to store a computer program, the transceiver is configured to communicate with other devices, and the processor is configured to invoke and run the computer program stored in the memory to cause the core network side device to perform the method according to any one of claims 21 to 33.

105. A first access network device, comprising: a transceiver, a processor, and a memory, wherein the memory is configured to store a computer program, the transceiver is configured to communicate with other devices, and the processor is configured to invoke and run the computer program stored in the memory to cause the first access network device to perform the method according to any one of claims 34 to 51.

106. A chip, comprising: a processor, configured to invoke and run a computer program from a memory, to cause a device equipped with the chip to perform the method according to any one of claims 1 to 20, or claims 21 to 33, or claims 34 to 51.

107. A computer-readable storage medium, configured to store a computer program, wherein when the computer program is run by a device, the device is caused to perform the method according to any one of claims 1 to 20, or claims 21 to 33, or claims 34 to 51.

108. A computer program product, comprising computer program instructions, wherein the computer program instructions cause a computer to perform the method according to any one of claims 1 to 20, or claims 21 to 33, or claims 34 to 51.

109. A computer program, wherein the computer program causes a computer to perform the method according to any one of claims 1 to 20, or claims 21 to 33, or claims 34 to 51.
